# EUROPÄISCHE PATENTSCHRIFT

(11) **EP 3 070 556 B1**
(45) Veröffentlichungstag und Bekanntmachung des Hinweises auf die Patenterteilung: **19.12.2018**
(21) Anmeldenummer: 15159216.9
(22) Anmeldetag: 16.03.2015
(51) Int. Cl.: G05B 19/042, G05B 19/05

(54) **VERFAHREN, RECHENEINRICHTUNG, BENUTZER-EINHEIT UND SYSTEM ZUM PARAMETRIEREN EINES ELEKTRISCHEN GERÄTES**
METHOD, COMPUTING DEVICE, USER UNIT AND SYSTEM FOR PARAMETERIZING AN ELECTRICAL APPARATUS
PROCÉDÉ, DISPOSITIF DE CALCUL, UNITÉ D'UTILISATEUR ET SYSTÈME DE PARAMÉTRAGE D'UN APPAREIL ÉLECTRIQUE

(43) Veröffentlichungstag der Anmeldung: 21.09.2016
(73) Patentinhaber: Siemens Aktiengesellschaft, 80333 München (DE)
(72) Erfinder: Fröhner, Wiebke, 92224 Amberg (DE); Werner, Thomas, 91126 Rednitzhembach (DE)

(56) Entgegenhaltungen:
- US-A1- 2007 206 740

## Beschreibung

Die Erfindung betrifft ein Verfahren zum Parametrieren eines elektrischen Gerätes, bei dem eine Kommunikationsverbindung zwischen einer Benutzer-Einheit und einer Recheneinrichtung aufgebaut wird, wobei von der Recheneinrichtung ein Parametrierprogramm zum Parametrieren des elektrischen Gerätes bereitgestellt wird, mittels der Benutzer-Einheit benutzerseitig vorgenommene Einstellungen, die das elektrische Gerät betreffen, erfasst werden, und unter Verwendung der erfassten Einstellungen Einstellwerte zur Parametrierung des elektrischen Gerätes gebildet und eine die Einstellwerte enthaltene Parametrierdatei für das elektrische Gerät erzeugt wird, wobei das Parametrierprogramm zum Parametrieren des elektrischen Gerätes von der Recheneinrichtung ausgeführt wird, wobei eine Bedienoberfläche für das Parametrierprogramm mittels der Benutzer-Einheit angezeigt wird. Die Erfindung bezieht sich auch auf eine Recheneinrichtung zum Parametrieren eines elektrischen Gerätes, eine Benutzer-Einheit zum Parametrieren eines elektrischen Gerätes sowie auf ein System mit einer Recheneinrichtung und einer Benutzer-Einheit.
Ein elektrisches Gerät muss üblicherweise vor dem Eintritt in einen Betriebszustand durch den Benutzer des Gerätes durch Vornahme benutzerseitig gewünschter Einstellungen an den Einsatzzweck angepasst werden. Beispielsweise müssen Vorgaben hinsichtlich einer Gerätebenennung, einer Zuordnung des Gerätes zu anderen Geräten oder organisatorischen Einheiten, Kommunikationseinstellungen und/oder Betriebsparametern, die das Verhalten des elektrischen Gerätes während seines Betriebs definieren vorgenommen werden. Einen solchen Vorgang bezeichnet man auch als Parametrierung des elektrischen Gerätes.
Elektrische Geräte können in diesem Zusammenhang insbesondere Geräte einer Automatisierungsanlage, z.B. Sensoren, Aktoren, Fehleranzeiger, Messgeräte, Schutzgeräte, Steuergeräte oder Kommunikationseinrichtungen (Router, Switche, Hubs, Bridges), sein. Die Automatisierungsanlage kann dabei zur Steuerung, Beobachtung, Überwachung, zum Schutz und/oder zur Regelung von industriellen Prozessen und Anlagen, Produktions- und Fertigungsanlagen, öffentlichen und privaten Einrichtungen (z.B. Gebäude, Verkehrssysteme) oder Verteil- bzw. Transportsystemen (z.B. für elektrische Energie, Feststoffe, Öl, Gas, Wasser, Luft etc.) dienen. Daneben können aber auch beliebige andere elektrische Geräte, z.B. Geräte aus dem Konsumentenbereich, Gegenstand einer Parametrierung sein.

Nachfolgend wird die Erfindung am Beispiel einer Automatisierungsanlage für eine elektrische Anlage erläutert, wie z.B. ein elektrisches Energieversorgungsnetz oder eine elektrische Schaltstation in einem Energieversorgungsnetz. Eine solche elektrische Anlage kann einzelne Komponenten, beispielsweise in Form von Leitungen und Kabeln, Schaltern, Transformatoren, Generatoren, Motoren, Umrichtern, Lasten, elektrischen Energieerzeugern etc. umfassen. Elektrische Geräte in einer solchen Automatisierungsanlage sind üblicherweise in räumlicher Nähe zu einzelnen Komponenten der elektrischen Anlage angeordnet und dienen beispielsweise dazu, Messwerte zu erfassen, die einen Zustand der jeweiligen Komponenten der Anlage beschreiben, oder Zustände jeweiliger Komponenten der Anlage zu beeinflussen. In diesem Zusammenhang können die elektrischen Geräte beispielsweise Sensoren, z.B. Sensoren zur Messung elektrischer Größen (z.B. Strom, Spannung), Temperatursensoren, Durchflusssensoren, Strömungssensoren etc., oder Aktoren, z.B. Stellglieder, Schaltersteuerungen, Ventile etc., sein. Elektrische Geräte können darüber hinaus auch intelligente Geräte (z.B. sogenannte IEDs - intelligent electronic devices) sein, die unter Ausführung bestimmter Algorithmen selbständig Aufgaben zur Automatisierung der Anlage wahrnehmen (z.B. sogenannte Fehlerindikatoren, die einen in einer Leitung fließenden Strom messen und bei Überschreitung eines Schwellenwertes ein Alarmsignal abgeben). IEDs können in diesem Zusammenhang insbesondere Schutz- und Steuergeräte, Messgeräte, Power Quality Geräte oder Leistungsmessgeräte (Power Meter) sein. Elektrische Geräte in einer solchen Automatisierungsanlage könne zudem auch Kommunikationsgeräte (Router, Switche, etc.) sein, die zur Übertragung von Nachrichten in einem Kommunikationssystem der Automatisierungsanlage dienen.

Die nachfolgende beispielhafte Erläuterung ist mithin nicht einschränkend zu verstehen; alle Ausführungen können somit in entsprechender Weise auch auf andere elektrische Geräte übertragen werden.

Die Automatisierung von elektrischen Energieversorgungsnetzen nimmt in den letzten Jahren immer weiter zu. Während nämlich bisher Energieversorgungsnetze weitgehend nur im Hoch- und teilweise auch im Mittelspannungsbereich flächendeckend mit Automatisierungssystemen ausgestattet sind, nehmen in letzter Zeit die Bestrebungen zu, auch Verteilnetze auf Mittel- und Niederspannungsebene stärker zu automatisieren. Netzbetreiber versprechen sich davon insbesondere eine Reduzierung von Ausfallzeiten. Außerdem müssen bestehende Energieversorgungsnetze, insbesondere auch auf der Verteilebene, an eine stetig zunehmende Einspeisung elektrischer Energie durch dezentrale Erzeugungsanlagen (z.B. Windkraft, Photovoltaik, Biomassekraftwerke, etc.) ertüchtigt werden. Als Konsequenz ergeben sich Automatisierungssysteme, die sich vor allem dadurch auszeichnen, dass sie eine sehr große Anzahl von elektrischen Geräten, insbesondere Aktoren und Sensoren, umfassen, räumlich über großen Flächen verteilt sind und eine große Anzahl von Daten sammeln.

Automatisierungslösungen, die nach einem klassischem Muster mit wenigen zentralen Leit- und Steuergeräten und daran angeschlossenen verteilten Automatisierungsgeräten bzw. Fernwirkgeräten aufgebaut sind, erfordern einen hohen Installations- und Parametrieraufwand. Aufgrund der großen Anzahl von Geräten in künftigen Automatisierungsanlagen stellt sich die Frage, wie die erforderliche Parametrierung der Geräte möglichst einfach und aufwandsarm vorgenommen werden kann.

Bisherige Systeme zur Parametrierung von elektrischen Geräten verwenden meist ein Parametrierungsgerät, das speziell auf das zu parametrierende elektrische Gerät zugeschnitten ist. In diesem Zusammenhang führt das Parametrierungsgerät üblicherweise ein für das zu parametrierende elektrische Gerät spezifisches Parametrierprogramm aus und erzeugt - in Interaktion mit einem Einstellungen vorgebenden Benutzer - einen Satz von Parametern, der anschließend in das elektrische Gerät übertragen wird. Ein solches Parametrierungsgerät ist z.B. aus der europäischen Patentschrift EP 1929382 B1 bekannt.

Sofern die zu parametrierenden Geräte eigene Eingabe- und Anzeigemöglichkeiten (z.B. Tasten und ein Display) aufweisen, kann eine Parametrierung in einigen Fällen auch direkt vor Ort am Gerät vorgenommen werden; ein Parametrierungsgerät ist dabei quasi in das elektrische Gerät integriert. Dabei muss das elektrische Gerät neben seiner Betriebssoftware auch das zur Parametrierung geeignete Parametrierprogramm aufweisen.

Sowohl bei separaten als auch bei im Gerät integrierten Parametrierungsgeräten besteht die Anforderung, die zu verwendenden Parametrierprogramme auf mehreren Einheiten aktuell zu halten, wodurch ein hoher Pflegeaufwand erzeugt wird.

Ein Verfahren zum Parametrieren eines elektrischen Gerätes der eingangs genannten Art ist zudem aus der deutschen Patentschrift DE 10253062 B4 bekannt. Bei dem bekannten Verfahren werden elektrische Geräte in Form von Schutzgeräten und Feldgeräten mittels einer Benutzer-Einheit in Form eines Rechners (z.B. ein Engineering-Arbeitsplatz) parametriert. Um das zur Parametrierung zu verwendende Parametrierprogramm stets aktuell zu halten, steht die Benutzer-Einheit mit einer Recheneinrichtung in Form eines Servers für Parametrieranwendungen in Verbindung und lädt vor einem Parametriervorgang das zu dem Gerät passende Parametrierprogramm. Dann können mittels der Benutzer-Einheit die Parametrierung vorgenommen und Parametereinstellungen zur Fertigstellung der Parametrierung des Gerätes auf das Gerät übertragen werden.

Aus der US2007/0206740 A1 geht ein System hervor, bei dem ein Gerät durch Zusammenwirken eines lokalen Computers und eines interaktiven Webseitenservers parametriert werden kann.

Bei den bekannten Verfahren besteht somit immer eine direkte Kommunikationsverbindung zwischen dem elektrischen Gerät und der Benutzer-Einheit. Neben hohen technischen Anforderungen, beispielsweise das Vorsehen einer speziellen, ggf. sogar drahtlosen, Parametrierschnittstelle des elektrischen Gerätes zur Herstellung der Kommunikationsverbindung mit der Benutzer-Einheit, entsteht hierdurch auch ein Sicherheitsrisiko, da über eine solche Parametrierschnittstelle sich auch unbefugte Personenkreise Zugriff auf die elektrischen Geräte verschaffen können. Außerdem erfordern die bekannten Systeme wie dargestellt einen vergleichsweise hohen Pflegeaufwand, der mit der Zahl und Vielfalt der zu parametrierenden elektrischen Geräte ansteigt.
Ausgehend von einem Verfahren der eingangs genannten Art, stellt sich somit die Aufgabe, ein Verfahren anzugeben, mit dem vergleichsweise einfach und kostengünstig eine Parametrierung elektrischer Geräte, insbesondere elektrischer Geräte, die in Automatisierungsanlagen in einem sicherheitskritischen Umfeld eingesetzt werden, erfolgen kann.
Außerdem stellt sich die Aufgabe, eine entsprechende Recheneinrichtung, eine entsprechende Benutzer-Einheit und ein entsprechendes System zum Parametrieren solcher elektrischen Geräte anzugeben.
Diese Aufgabe wird hinsichtlich des Verfahrens erfindungsgemäß durch ein Verfahren der eingangs genannten Art gelöst, bei dem in der Benutzer-Einheit ein dem Betreiber des elektrischen Gerätes zugeordneter eindeutiger digitaler Betreiber-Schlüssel gespeichert ist und die Benutzer-Einheit den Schlüssel an die Recheneinrichtung sendet, und die Recheneinrichtung unter Verwendung des Betreiber-Schlüssels die Einstellwerte und/oder die Parametrierdatei und/oder weitere auf das elektrische Gerät bezogene Informationen und/oder von dem elektrischen Gerät im Betrieb empfangene Daten verschlüsselt abspeichert. Alternativ kann vorgesehen sein, dass in der Benutzer-Einheit ein dem Betreiber des elektrischen Gerätes zugeordneter eindeutiger digitaler Betreiber-Schlüssel gespeichert ist und die Benutzer-Einheit den Schlüssel an die Recheneinrichtung sendet, und die Recheneinrichtung die Einstellwerte und/oder die Parametrierdatei und/oder weitere auf das elektrische Gerät bezogene Informationen und/oder von dem elektrischen Gerät im Betrieb empfangene Daten in einem unter Verwendung des Betreiber-Schlüssels zugriffsgeschützten Bereich abspeichert.

Auf diese Weise können die mit dem elektrischen Gerät in Verbindung stehenden Daten - sowohl die zur Parametrierung verwendeten Einstellwerte als auch etwaige andere Daten, z.B. Betriebsdaten wie Messwerte etc. - auf der Recheneinrichtung vor unbefugten Zugriffen geschützt werden. Dies erfolgt unter Verwendung des Betreiber-Schlüssels entweder durch Verschlüsselung der jeweiligen Daten oder durch Absicherung eines Datenbereichs, der für Daten, die dem Betreiber des elektrischen Gerätes zugeordnet sind, reserviert ist, gegen unbefugte Zugriffe. Eine solche Maßnahme ist insbesondere dann notwendig, wenn die Recheneinrichtung in einer Datenverarbeitungs-Cloud ausgebildet ist, mittels der Geräte mehrerer Betreiber verwaltet werden. Durch entsprechende Absicherung der Daten bzw. Datenbereiche kann sichergestellt werden, dass nur der Betreiber, der über seinen Betreiber-Schlüssel verfügt, auf die Daten seines elektrischen Gerätes zugreifen kann.

Ein Betreiber-Schlüssel kann entweder auf der Benutzer-Einheit vorab abgespeichert sein, nach Benutzereingabe abgespeichert werden oder durch ein Zuweisungsverfahren, beispielsweise ein Zuweisungsverfahren aus dem Bereich des Online-Bankings (z.B. mTAN), an die Benutzer-Einheit verteilt werden.

Bei der Benutzer-Einheit kann es sich beispielsweise um einen tragbaren Computer (Notebook, Laptop, Tablet, PDA etc.) oder ein mobiles Kommunikationsgerät (Mobiltelefon, Smartphone etc.) handeln. Die Benutzer-Einheit kann jedoch auch eine stationäre Datenverarbeitungseinrichtung, z.B. eine Workstation, sein.
Bei der Recheneinrichtung kann es sich um einen einzelnen oder eine Mehrzahl von Datenverarbeitungseinrichtungen (Computer, Server etc.) handeln, die in geeigneter Weise zur Durchführung des Parametrierprogramms zusammenwirken. Vorzugsweise besteht zwischen der Recheneinrichtung und dem elektrischen Gerät eine drahtgebundene oder eine drahtlose Kommunikationsverbindung. Diese kann dauerhaft vorhanden sein oder bedarfsweise aufgebaut werden. Die Recheneinrichtung kann zudem eine Schnittstelle zu einer Bedien- und Beobachtungsstation (z.B. einem Computer in einer Leitstelle, oder einer Workstation) aufweisen, um auf das elektrische Gerät bezogene und/oder von diesem gelieferte Daten dem Betreiber des elektrischen Gerätes darstellen zu können.
Die Benutzer-Einheit kann mit der Recheneinrichtung eine drahtlose (z.B. über WLAN, WiFi, etc. oder Mobilfunk, z.B. GSM, GPRS, UMTS, LTE etc.) oder eine drahtgebundene (z.B. über ein drahtgebundenes LAN oder eine drahtgebundene Telefonverbindung) Kommunikationsverbindung herstellen. Da zwischen der Benutzer-Einheit und der Recheneinrichtung lediglich geringe Datenmengen übertragen werden müssen, werden keine besonders hohen Anforderungen an die Kommunikationsverbindung gestellt.
Bei dem erfindungsgemäßen Verfahren findet somit eine Verlagerung der aus dem Stand der Technik bekannten Ausführung eines Parametrierprogramms von der Benutzer-Einheit auf die Recheneinrichtung statt, wobei Recheneinrichtung und Benutzer-Einheit jedoch derart zusammenwirken, dass eine Bedienoberfläche für das Parametrierprogramm von der Benutzer-Einheit angezeigt wird und der Benutzer zur Parametrierung des elektrischen Geräts notwendige Einstellungen mit der Benutzer-Einheit vornehmen kann. Diese Lösung weist einerseits den Vorteil auf, dass weder die Benutzer-Einheit noch das elektrische Gerät selbst das Parametrierprogramm vorhalten müssen. Insbesondere bei einer großen Vielfalt an zu parametrierenden elektrischen Geräten, die entsprechend eine große Vielfalt an Parametrierprogrammen erfordern würde, lässt sich eine Vorhaltung und Pflege der benötigten Parametrierprogramme auf der Recheneinrichtung deutlich einfacher bewerkstelligen als auf jeder einzelnen Benutzer-Einheit. Zudem werden nur geringe Anforderungen an Speicherplatz und Rechenkapazität der Benutzer-Einheit gestellt, da die aufwendigen Programmschritte von der Recheneinrichtung durchgeführt werden. Die Benutzer-Einheit muss lediglich dazu eingerichtet sein, die Bedienoberfläche anzuzeigen und benutzerseitige Einstellungen zu erfassen. Da die Benutzer-Einheit lediglich in der Lage sein muss, eine Bedienoberfläche eines auf der Recheneinrichtung ablaufenden Parametrierprogramms anzuzeigen und diesbezüglich benutzerseitige Eingaben zu erfassen, ist es ausreichend, wenn die Benutzer-Einheit dafür ein vergleichsweise einfaches Programm ausführt. Dabei kann es sich z.B. um einen Browser handeln, mit dem eine von der Recheneinrichtung bereitgestellte Webseite zur Erfassung von Einstellungen für das elektrische Gerät angezeigt wird. Auf der Benutzer-Einheit kann aber auch ein beliebiges anderes Programm, z.B. eine sogenannte "APP", vorgesehen sein, das zur Anzeige der Bedienoberfläche ausgebildet ist.

Ein weiterer Vorteil besteht darin, dass zwischen der Benutzer-Einheit und dem zu parametrierenden elektrischen Gerät keine Kommunikationsverbindung bestehen muss. Hierdurch wird die Möglichkeit zum unbefugten Zugriff auf das elektrische Gerät deutlich verringert.

Nach der Parametrierung des elektrischen Gerätes kann dieses im Betrieb weitere Daten, z.B. Messwerte, Statuswerte, Ereigniswerte etc. aufnehmen und an die Recheneinrichtung senden. Die Recheneinrichtung speichert die fraglichen Daten, so dass das elektrische Gerät selbst keinen besonders großen Speicherplatz vorhalten muss.

Eine vorteilhafte Ausführungsform des erfindungsgemäßen Verfahrens sieht vor, dass beim Ausführen des Parametrierprogramms von der Recheneinrichtung erste Daten, die zur Erzeugung der Bedienoberfläche für das Parametrierprogramm geeignet sind, an die Benutzer-Einheit übertragen werden, mittels der Benutzer-Einheit unter Verwendung der empfangenden ersten Daten die Bedienoberfläche zur Erfassung der benutzerseitigen Einstellungen erzeugt und angezeigt wird, zweite Daten, die die erfassten benutzerseitig vorgenommenen Einstellungen angeben, von der Benutzer-Einheit an die Recheneinrichtung übertragen werden, mittels der Recheneinrichtung unter Verwendung der empfangenen zweiten Daten die Einstellwerte für das elektrische Gerät gebildet werden, und mittels der Recheneinrichtung unter Verwendung der gebildeten Einstellwerte die Parametrierdatei erzeugt wird.

Bei den von der Recheneinrichtung an die Benutzer-Einheit übertragenen ersten Daten kann es sich z.B. um Daten in einem von einem Browser anzeigbaren Datenformat (z.B. HTML, XML) handeln. Dasselbe Datenformat kann auch zur Übermittlung der Einstellungen in Form der zweiten Daten an die Recheneinrichtung verwendet werden.

Bei den von der Benutzer-Einheit erfassten Einstellungen kann es sich z.B. um einen Namen des Gerätes, einen Namen einer Station, in der das Gerät betrieben wird, Bezeichnungen von Primärkomponenten, mit denen das Gerät verbunden ist (z.B. eine elektrische Leitung, an der das Gerät Messwerte aufnimmt), Kommunikationsadressen oder Betriebsparameter (z.B. Schwellenwerte zum Vergleich gemessener Werte) handeln. Außerdem kann vorgesehen sein, dass die von der Benutzer-Einheit erfassten Einstellungen eine den geografischen Ort, an dem das elektrische Gerät betrieben wird, angebende Geoinformation umfassen. Bei einer Reihe von Arbeitsprozessen in Automatisierungssystemen ist es für den Betreiber nämlich wichtig zu wissen, an welcher geografischen Position ein Gerät eingebaut ist. Dies ist zum Beispiel bei den Fehlerindikatoren an Mittelspannungsfreileitungen von Bedeutung, die bei einem Überstrom ein Fehlersignal abgeben. Mit Kenntnis des geografischen Einbauortes kann der Betreiber bei Störungsfällen die betroffene Fehlerstelle schneller anfahren und eine Störung beheben. Hierzu kann die Geoinformation (z.B. in Form von Geo-Koordinaten) entweder manuell vom Benutzer in der Benutzer-Einheit eingegeben werden oder die Benutzer-Einheit kann mittels eines Geosensors (z.B. eines GPS-Moduls) eine Ortung des Einbauortes durchführen und die zugehörige Geoinformation direkt in die Einstellungen übernehmen und an die Recheneinrichtung übertragen.

Es kann vorgesehen sein, dass die Parametrierdatei mit den Einstellwerten für das elektrische Gerät ausschließlich auf der Recheneinrichtung vorgehalten werden und das elektrische Gerät während seines Betriebs bei Bedarf auf diese Einstellwerte zugreift.

Gemäß einer vorteilhaften Ausführungsform des erfindungsgemäßen Verfahrens kann jedoch auch vorgesehen sein, dass zumindest Teile der Parametrierdatei von der Recheneinrichtung an das elektrische Gerät übertragen werden.

Damit können die für den Betrieb des elektrischen Gerätes erforderlichen Einstellwerte als Ergebnis des Parametriervorgangs direkt im elektrischen Gerät abgelegt und dort lokal zum Betrieb verwendet werden.

Gemäß einer weiteren vorteilhaften Ausführungsform des erfindungsgemäßen Verfahrens kann zudem vorgesehen sein, dass mit der Benutzer-Einheit eine Identifizierungsinformation des elektrischen Gerätes erfasst wird, die Identifizierungsinformation des elektrischen Gerätes von der Benutzer-Einheit an die Recheneinrichtung übertragen wird, und die Recheneinrichtung das Parametrierprogramm unter Verwendung der Identifizierungsinformation derart anpasst, dass es zum Parametrieren des Geräts geeignet ist, oder aus einer Mehrzahl von Parametrierprogrammen ein zum Parametrieren des Gerätes geeignetes auswählt.

Auf diese Weise kann von der Recheneinrichtung, insbesondere bei einer Vielzahl von unterschiedlichen zu parametrierenden elektrischen Geräten, auf einfache Weise ein jeweils zur Parametrierung des elektrischen Geräts geeignetes Parametrierprogramm bereitgestellt werden. Die Recheneinrichtung erkennt nämlich an der Identifizierungsinformation, um welches Gerät es sich handelt und kann entweder aus mehreren Parametrierprogrammen das zu dem elektrischen Gerät passende auswählen oder ein universelles Parametrierprogramm derart anpassen, dass es zur Parametrierung des elektrischen Gerätes geeignet ist, indem z.B. nur die für das elektrische Gerät passenden Einstellmöglichkeiten angeboten werden.

Bei der Identifizierungsinformation des elektrischen Gerätes kann es sich beispielsweise um eine Gerätebezeichnung, eine Seriennummer, einen Gerätetyp etc. handeln. Beispielsweise kann die Identifizierungsinformation von dem Benutzer in die Benutzer-Einheit manuell eingegeben werden. Als besonders vorteilhaft wird es jedoch angesehen, wenn das elektrische Gerät die Identifizierungsinformation in Form eines optisch erfassbaren Codes bereitstellt, und die Benutzer-Einheit den Code mittels eines optischen Sensors erfasst und daraus die Identifizierungsinformation ermittelt. Bei dem optisch erfassbaren Code kann es sich beispielsweise um einen auf dem elektrischen Gerät aufgedruckten oder aufgeklebten Barcode oder QR-Code (QR=Quick Response) handeln, der mit einer optischen Lesevorrichtung (z.B. einer Kamera) der Benutzer-Einheit erfasst wird. Der Code kann auch auf einem etwaigen vorhandenen Display des elektrischen Gerätes angezeigt werden. Die Benutzer-Einheit ermittelt aus dem Code unter Verwendung an sich gängiger Verfahren die Identifizierungsinformation des elektrischen Gerätes und überträgt diese an die Recheneinrichtung.

Neben der Auswahl der geeigneten Parametriersoftware für das elektrische Gerät verwendet die Recheneinrichtung die Identifizierungsinformation auch dazu, das elektrische Gerät bei für den Betrieb anzumelden. Beispielsweise kann nämlich die Recheneinrichtung neben dem Parametrierprogramm auch ein Steuer- und Überwachungsprogramm für ein elektrisches Energieversorgungsnetz durchführen, wobei das elektrische Gerät ein Teil (z.B. ein Sensor oder ein Aktor) einer Automatisierungsanlage für das Energieversorgungsnetz ist. In diesem Zusammenhang kann vorgesehen sein, dass das elektrische Gerät im Betrieb Daten an die Recheneinrichtung übermittelt. Dabei kann es sich beispielsweise um Messwerte, Statuswerte, Ereignismeldungen, Diagnosedaten etc. handeln, die einen Zustand des elektrischen Gerätes selbst und/oder einer daran angeschlossenen Komponente (z.B. einer elektrischen Leitung oder einer anderen Primärkomponente in einem elektrischen Energieversorgungsnetz) angeben. Außerdem kann im Betrieb des elektrischen Gerätes vorgesehen sein, dass es Daten von der Recheneinrichtung empfängt. Bei diesen Daten kann es sich beispielsweise um Kommandos, Steuerdaten, Softwareupdates oder geänderte Parameter handeln. Die Anmeldung des elektrischen Geräts bei der Recheneinrichtung mittels der Identifizierungsinformation stellt damit die Grundlage für den Betrieb des elektrischen Gerätes im Zusammenwirken mit der Recheneinrichtung dar. Erst ab einer erfolgreichen Anmeldung während der Erstparametrierung kennt die Recheneinrichtung das elektrische Gerät und weiß damit, welche Daten es von dem Gerät empfangen kann und welche an das Gerät zu senden sind.

Außerdem kann vorgesehen sein, dass die Recheneinrichtung unter Verwendung der Identifizierungsinformation weitere auf das elektrische Gerät bezogene Informationen ermittelt. Hierunter fallen insbesondere statische Daten, die den Gerätetyp, eine Gerätedokumentation, verfügbare Funktionen des Geräts, einen Hersteller des Geräts oder Online-Verknüpfungen zu Support- und Updatedateien für das Gerät angeben. Diese Informationen müssen in diesem Fall nicht manuell von dem Benutzer über die Benutzer-Einheit eingegeben werden, sondern werden von der Recheneinrichtung automatisch anhand der Identifizierungsinformation ermittelt. Dazu kann die Recheneinrichtung beispielsweise eine Datenbank mit allen üblichen Geräten, die für eine Parametrierung vorgesehen sein können, umfassen. Vorteilhafterweise ist die Datenbank dazu ausgelegt zumindest einen Bestandteil der Identifizierungsinformation dazu zu verwenden, um zumindest allgemeine Informationen (z.B. Typ, Hersteller, Version) des elektrischen Gerätes zu ermitteln.

Eine weitere vorteilhafte Ausführungsform des erfindungsgemäßen Verfahrens sieht vor, dass die Recheneinrichtung in einer Datenverarbeitungs-Cloud bereitgestellt wird.

Unter einer Datenverarbeitungs-Cloud soll hierbei eine Anordnung mit einer oder mehreren Datenspeichereinrichtungen und einer oder mehreren Datenverarbeitungseinrichtungen verstanden werden, die durch geeignete Programmierung zur Durchführung beliebiger Datenverarbeitungsprozesse ausgebildet werden kann. Die Datenverarbeitungseinrichtungen stellen hierbei in der Regel universelle Datenverarbeitungseinrichtungen (z.B. Server) dar, die hinsichtlich ihrer Konstruktion und ihrer Programmierung zunächst keinerlei spezifische Auslegung aufweisen. Erst durch eine vorgenommene Programmierung lässt sich die universelle Datenverarbeitungseinrichtung zur Ausführung spezifischer Funktionen ertüchtigen. Sofern die Datenverarbeitungs-Cloud mehrere einzelne Komponenten aufweist, sind diese auf geeignete Weise zur Datenkommunikation miteinander verbunden (z.B. durch ein Kommunikationsnetzwerk). Einer Datenverarbeitungs-Cloud können beliebige Daten zur Datenspeicherung und/oder -verarbeitung zugeführt werden. Die Datenverarbeitungs-Cloud selbst stellt die gespeicherten Daten und/oder die Ergebnisse der durchgeführten Datenverarbeitung wiederum anderen Geräten, z.B. einer mit der Datenverarbeitungs-Cloud verbundenen Computer-Arbeitsstation (Workstation), zur Verfügung. Eine Datenverarbeitungs-Cloud kann beispielsweise durch ein Rechenzentrum oder auch mehrere vernetzte Rechenzentren bereitgestellt werden. Üblicherweise ist eine Datenverarbeitungs-Cloud räumlich entfernt von der Anlage ausgebildet.
Die Datenverarbeitungs-Cloud kann dabei beispielsweise von demselben Betreiber wie das elektrische Gerät betrieben werden. Beispielsweise könnte es sich dabei um eine Serveranlage oder ein Rechenzentrum des Anlagenbetreibers handeln. Es kann aber auch vorgesehen sein, dass die Datenverarbeitungscloud einem anderen Betreiber als dem Betreiber des elektrischen Gerätes zugeordnet ist. Dies kann für den Betreiber des elektrischen Gerätes, insbesondere für den Fall, dass viele elektrische Geräte betrieben werden müssen, den Vorteil besitzen, dass er sich um den Betrieb und die Pflege der Datenverarbeitungs-Cloud nicht selbst kümmern muss, sondern diese Aufgaben dem Betreiber der Datenverarbeitungs-Cloud übertragen hat, die dieser als Dienstleistung anbietet.

Um die Sicherheit gegen unbefugten Zugriff noch weiter zu erhöhen, kann in diesem Zusammenhang auch vorgesehen sein, dass bei einer Anschaffung eines neuen elektrischen Gerätes durch den Betreiber die Recheneinrichtung eine Identifizierungsinformation des neuen elektrischen Gerätes mit einem Betreiber-Schlüssel des Betreibers verknüpft und abspeichert, und bei einer Parametrierung des neuen elektrischen Gerätes die Recheneinrichtung nur solche Einstellungen für das neue elektrische Gerät akzeptiert, die von einer Benutzer-Einheit stammen, die über denselben Betreiber-Schlüssel verfügt.

In diesem Fall wird das elektrische Gerät durch eine zumindest teilweise mittels elektronischer Datenverarbeitung unterstützte Vertriebsplattform an den Betreiber verkauft. Die Recheneinrichtung steht mit der Vertriebsplattform in Verbindung oder bildet sogar selbst eine solche Vertriebsplattform aus. Beim Verkauf eines neuen elektrischen Gerätes wird dessen Identifizierungsinformation direkt mit dem Betreiber-Schlüssel des Betreibers verknüpft und das aus Identifizierungsinformation und Betreiber-Schlüssel gebildete Paar auf der Recheneinrichtung abgespeichert. Danach kann sichergestellt werden, dass nur noch unter Verwendung des Betreiber-Schlüssels, also nur durch vom Betreiber autorisierte Benutzer-Einheiten, eine Parametrierung des elektrischen Gerätes vorgenommen werden kann.

Gemäß einer weiteren vorteilhaften Ausführungsform des erfindungsgemäßen Verfahrens kann zudem vorgesehen sein, dass nach Abschluss der Parametrierung des elektrischen Geräts mit der Benutzer-Einheit von der Recheneinrichtung eine Software-Information abgerufen wird, die einen Versionsstand einer aktuellen Gerätesoftware für das elektrische Gerät angibt, und die Benutzer-Einheit die Software-Information anzeigt und auf benutzerseitigen Befehl oder automatisch eine Aktualisierungs-Aufforderung an die Recheneinrichtung versendet, um die Recheneinrichtung zum Übertragen der aktuellen Gerätesoftware an das elektrische Gerät zu veranlassen.

In diesem Fall kann über die Benutzer-Einheit und die Recheneinrichtung nach der erstmaligen Parametrierung des elektrischen Gerätes eine Software-Aktualisierung der Gerätesoftware des elektrischen Gerätes veranlasst werden. Dies kann entweder durch eine benutzerseitige Eingabe erfolgen, wenn der Benutzer erkennt, dass die Gerätesoftware des elektrischen Gerätes älter ist als die aktuell verfügbare Gerätesoftware. Sofern die Benutzer-Einheit den Versionsstand der Gerätesoftware des elektrischen Gerätes kennt oder einlesen kann, kann eine solche Aufforderung auch automatisch ausgelöst werden.

Gemäß einer weiteren vorteilhaften Ausführungsform des erfindungsgemäßen Verfahrens kann auch vorgesehen sein, dass nach Abschluss der Parametrierung des elektrischen Geräts für den Fall, dass das elektrische Gerät durch ein anderes elektrisches Gerät zu ersetzen ist, die Benutzer-Einheit an die Recheneinrichtung eine Identifizierungsinformation des elektrischen Gerätes und eine Identifizierungsinformation des anderen elektrischen Gerätes sendet, und die Recheneinrichtung die Einstellwerte des elektrischen Gerätes als Einstellwerte für das andere elektrische Gerät übernimmt.

Hierdurch wird es ermöglicht, über die Benutzer-Einheit und die Recheneinrichtung einen Austausch eines elektrischen Gerätes, ggf. aufgrund eines Defektes, zu unterstützen. Mit der Benutzer-Einheit werden nämlich in diesem Fall die Identifizierungsinformation des auszutauschenden elektrischen Gerätes und die Identifizierungsinformation des Austausch-Gerätes erfasst (z.B. wie oben beschrieben durch jeweiliges Einlesen und Auswerten eines optisch erfassbaren Codes) und beide Identifizierungsinformationen an die Recheneinrichtung versendet. Hierdurch wird das auszutauschende Gerät bei der Recheneinrichtung abgemeldet und das Austausch-Gerät bei der Recheneinrichtung angemeldet. Außerdem werden die Einstellwerte des auszutauschenden Gerätes für das Austausch-Gerät übernommen, so dass keine neue Parametrierung notwendig ist. Wenn die Einstellwerte des auszutauschenden elektrischen Gerätes auch auf der Recheneinrichtung gespeichert sind, erübrigt sich hierdurch z.B. auch das Vorsehen eines wechselbaren Speichers (z.B. einer SD-Karte) im elektrischen Gerät, um eine Parametrierdatei von einem Gerät aufs andere übertragen zu können. In diesem Fall können nämlich die Einstellwerte direkt von der Recheneinrichtung an das Austausch-Gerät übertragen werden.

Sofern auf der Recheneinrichtung weitere auf das auszutauschende Gerät bezogene Daten (z.B. alte Messwerte etc.) gespeichert sind, werden diese gleichzeitig mit der Identifizierungsinformation des Austausch-Gerätes verknüpft, so dass ein nahtloser Weiterbetrieb ohne Verlust der bisher im Zusammenhang mit dem auszutauschenden Gerät gespeicherten Daten sichergestellt ist.

Hinsichtlich der Recheneinrichtung wird die oben genannte Aufgabe durch eine Recheneinrichtung gelöst, die dazu eingerichtet ist ein Parametrierprogramm zum Parametrieren des elektrischen Gerätes bereitzustellen, und mit einer Benutzer-Einheit, die zur Eingabe von Einstellungen für das elektrische Gerät eingerichtet ist, zu kommunizieren.

Erfindungsgemäß ist vorgesehen, dass die Recheneinrichtung dazu ausgebildet ist, das Parametrierprogramm zum Parametrieren des elektrischen Gerätes von der Recheneinrichtung auszuführen und bei der Ausführung des Parametrierprogramms eine Bedienoberfläche für das Parametrierprogramm zur Anzeige und benutzerseitigen Eingabe von Einstellungen für das elektrische Gerät an die Benutzer-Einheit zu übertragen.

Konkret kann hierbei vorgesehen sein, dass die Recheneinrichtung in einer Datenverarbeitungs-Cloud ausgebildet ist.

Hinsichtlich der erfindungsgemäßen Recheneinrichtung gelten alle zu dem erfindungsgemäßen Verfahren voranstehend und nachfolgend gemachten Ausführungen und umgekehrt in entsprechender Weise, insbesondere ist die erfindungsgemäße Recheneinrichtung zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Recheneinrichtung wird auf die zu dem erfindungsgemäßen Verfahren beschriebenen Vorteile verwiesen.

Mit Bezug auf die Benutzer-Einheit wird die oben genannte Aufgabe durch eine Benutzer-Einheit zum Parametrieren eines elektrischen Gerätes gelöst, die dazu eingerichtet ist eine Kommunikationsverbindung mit einer Recheneinrichtung aufzubauen, die ein Parametrierprogramm zum Parametrieren des elektrischen Gerätes bereitstellt, und benutzerseitig vorgenommene Einstellungen, die das elektrische Gerät betreffen, zu erfassen.

Erfindungsgemäß ist vorgesehen, dass die Benutzer-Einheit dazu eingerichtet ist, mit der Recheneinrichtung, die das Parametrierprogramm zum Parametrieren des elektrischen Gerätes ausführt, derart zusammenzuwirken, dass eine Bedienoberfläche für das Parametrierprogramm zur Erfassung benutzerseitiger Einstellungen mittels der Benutzer-Einheit angezeigt wird.

Konkret kann hierbei vorgesehen sein, dass die Benutzer-Einheit als mobiles Kommunikationsgerät oder tragbare Datenverarbeitungseinrichtung ausgebildet ist.

Auch hinsichtlich der erfindungsgemäßen Benutzer-Einheit gelten alle zu dem erfindungsgemäßen Verfahren voranstehend und nachfolgend gemachten Ausführungen und umgekehrt in entsprechender Weise, insbesondere ist die erfindungsgemäße Benutzer-Einheit zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Benutzer-Einheit wird auf die zu dem erfindungsgemäßen Verfahren beschriebenen Vorteile verwiesen.

Die oben genannte Aufgabe wird schließlich auch durch ein System zum Parametrieren eines elektrischen Gerätes mit einer Recheneinrichtung, die ein Parametrierprogramm zum Parametrieren des elektrischen Gerätes bereitstellt, und einer Benutzer-Einheit gelöst.

Erfindungsgemäß ist vorgesehen, dass die Recheneinrichtung nach Anspruch 11 oder 12 ausgebildet ist, die Benutzer-Einheit nach Anspruch 13 oder 14 ausgebildet ist, und die Recheneinrichtung und die Benutzer-Einheit dazu eingerichtet ist, ein Verfahren nach einem der Ansprüche 1 bis 10 durchzuführen.

Auch hinsichtlich des erfindungsgemäßen Systems gelten alle zu dem erfindungsgemäßen Verfahren voranstehend und nachfolgend gemachten Ausführungen und umgekehrt in entsprechender Weise, insbesondere ist das erfindungsgemäße System zur Durchführung des erfindungsgemäßen Verfahrens in jeder beliebigen Ausführungsform oder einer Kombination beliebiger Ausführungsformen eingerichtet. Auch hinsichtlich der Vorteile des erfindungsgemäßen Systems wird auf die zu dem erfindungsgemäßen Verfahren beschriebenen Vorteile verwiesen.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens, der erfindungsgemäßen Recheneinrichtung, der erfindungsgemäßen Benutzer-Einheit und des erfindungsgemäßen Systems in keiner Weise einschränkend zu verstehen; vielmehr können einzelne Ausgestaltungsmerkmale des Ausführungsbeispiels in beliebiger Weise frei untereinander und mit den voranstehend beschriebenen Merkmalen kombiniert werden.

Es zeigen
- Figur 1: eine schematische Ansicht eines Systems mit einer Recheneinrichtung und elektrischen Geräten;
- Figur 2: eine schematische Ansicht einer Recheneinrichtung und elektrischen Geräten mehrerer Anlagen;
- Figur 3: eine schematische Ansicht eines Systems zum Parametrieren eines elektrischen Gerätes;
- Figur 4: ein Ablaufschema eines Verfahrens zum Parametrieren eines elektrischen Gerätes;
- Figur 5: eine schematische Ansicht eines Systems zum Parametrieren zweier elektrischer Geräte;
- Figur 6: eine schematische Ansicht eines Systems zur Erläuterung der Parametrierung eines Austausch-Gerätes.

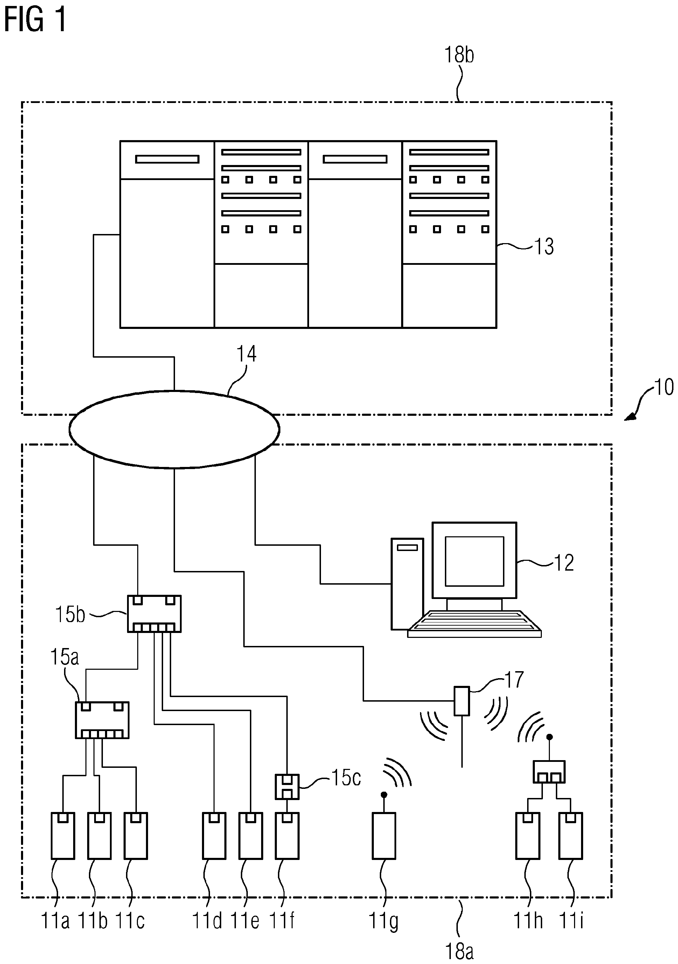

Figur 1 zeigt in schematischer Ansicht ein System 10 zum Beobachten und/oder Steuern einer in Figur 1 der Übersichtlichkeit halber nicht gezeigten Anlage. Bei der Anlage kann es sich beispielsweise um ein elektrisches Energieversorgungsnetz oder eine Schaltstation eines Energieversorgungsnetzes handeln. Eine solche Anlage weist einzelne Komponenten, z.B. Leitungen, Kabel, Schalter, Transformatoren, Generatoren, Motoren, Umrichter, elektrische Lasten, elektrische Energieerzeuger, elektrische Speicher etc., auf, deren Zustand mit elektrischen Geräten 11a-i durch Aufnahme entsprechender Messwerte erfasst und/oder durch Vornahme bestimmter Aktionen (z.B. Ansteuern eines Schalters) beeinflusst wird. Bei den elektrischen Geräten 11a-i kann es sich z.B. um Sensoren oder Aktoren oder sogenannte IEDs handeln. Zur Beobachtung und/oder Steuerung der Anlage ist zudem eine Leitstellenanordnung 12 vorgesehen, bei der es sich z.B. um eine oder mehrere Datenverarbeitungseinrichtungen in einer Leitstelle handeln kann. Die Leitstellenanordnung 12 bildet die Schnittstelle zum Bedienpersonal der Anlage und dient zur Auswertung und Anzeige von Betriebszuständen der Anlage und/oder zur Entgegennahme oder selbständigen Erzeugung von Steuerkommandos zur Beeinflussung des Betriebszustandes der Anlage.

Das System 10 umfasst darüber hinaus eine Recheneinrichtung 13, die sowohl mit der Leitstellenanordnung 12 als auch mit den elektrischen Geräten 11a-i in Kommunikationsverbindung steht. Die Recheneinrichtung 13 ist z.B. in einer Datenverarbeitungs-Cloud ausgebildet. Die Datenverarbeitungs-Cloud kann beispielsweise von einer Serveranlage oder einem Rechenzentrum bereitgestellt werden. In dem Beispiel gemäß Figur 1 sind die elektrischen Geräte 11a-i, die Leitstellenanordnung 12 und die Recheneinrichtung 13 zumindest mittelbar über ein Kommunikationsnetzwerk 14 verbunden, bei dem es sich z.B. um ein LAN (local area network), ein WAN (wide area network) ein Intranet oder das Internet oder eine Kombination aus verschiedenen Netzwerken (z.B. LAN und Internet) handeln kann.

In einer Ausführungsform können die Leitstellenanordnung 12 bzw. Funktionen der Leitstellenanordnung 12 ganz oder teilweise durch die Recheneinrichtung 13 ausgebildet sein. In dem oben beschriebenen Fall könnten somit folglich Funktionen der Leitstelleneinrichtung 12 in der Datenverarbeitungs-Cloud ausgeführt werden.

Die einzelnen elektrischen Geräte 11a-i stehen über das Kommunikationsnetzwerk 14 mittelbar mit der Recheneinrichtung 13 in Verbindung. Konkret sind die elektrischen Geräte 11a-c mit einem ersten Switch 15a verbunden, der wiederum mit einem zweiten Switch 15b in Verbindung steht. Mit diesem zweiten Switch 15b sind auch die weiteren elektrischen Geräte 11d-f verbunden, wobei die elektrischen Geräte 11d und 11e direkt mit dem Switch 15b in Verbindung stehen und das elektrische Gerät 15f über einen Kommunikationskoppler 15c mit dem Switch 15b verbunden ist. Während nämlich die elektrischen Geräte 11a-e je eine geeignete Schnittstelle 16a (z.B. eine Ethernet-Schnittstelle) zur direkten Ankopplung an ein mit dem Switch 15a bzw. 15b verbundenes Kommunikationsmedium (z.B. ein Ethernetkabel) umfassen, fehlt dem elektrischen Gerät 11f eine solche Schnittstelle 16a. Stattdessen weist das elektrische Gerät 11f eine andere Schnittstelle 16b (z.B. eine serielle Schnittstelle) auf. Der Kommunikationskoppler 15c weist eine entsprechende Schnittstelle 16b auf, über die er mit dem elektrischen Gerät 11f in Verbindung steht. Darüber hinaus umfasst der Kommunikationskoppler 15c auch eine zum Anschluss an den Switch 15b geeignete Schnittstelle 16a. Der Kommunikationskoppler 15c dient folglich dazu, das elektrische Gerät 11f kommunikativ an den Switch 15b anzukoppeln und führt dazu eine entsprechende Kommunikationsumsetzung zwischen den beiden Schnittstellen 16a und 16b durch. Der Switch 15b steht schließlich mit dem Kommunikationsnetzwerk 14 in Verbindung.

Außerdem steht mit dem Kommunikationsnetzwerk 14 eine Kommunikationszugangseinrichtung 17 in Verbindung, die einen Zugangspunkt für drahtlose Kommunikationsverbindungen bereitstellt. Bei der Kommunikationszugangseinrichtung 17 handelt es sich beispielsweise um einen entsprechend für den Betrieb in Anlagenumgebungen ausgebildeten WiFi-Router bzw. einen WLAN-Access Point. Mit der Kommunikationszugangseinrichtung 17 stehen die elektrischen Geräte 11g-i in Verbindung, wobei das elektrische Gerät 11g eine eigene Kommunikationseinrichtung zur drahtlosen Kommunikation aufweist und darüber direkt mit der Kommunikationszugangseinrichtung 17 in Verbindung steht. Die elektrischen Geräte 11h und 11i weisen hingegen keine eigenen Kommunikationseinrichtungen für drahtlose Kommunikation auf und sind stattdessen über Kabelverbindungen mit einem geeigneten Kommunikationskoppler 15d verbunden. Dieser stellt eine Schnittstelle zur drahtlosen Verbindung mit der Kommunikationszugangseinrichtung 17 zur Verfügung.

Die Recheneinrichtung 13 ist ebenfalls mit dem Kommunikationsnetzwerk 14 verbunden. Diese Verbindung kann unmittelbar oder mittelbar (z.B. über eine DSL-Verbindung) hergestellt sein. Auf diese Weise ist die Recheneinrichtung 13 auch mit den elektrischen Geräten 11a-i verbunden. Dazu weist die Recheneinrichtung 13 eine geeignete Schnittstelle (z.B. eine oder mehrere physikalische Ethernet-Schnittstellen) auf.
Im Zusammenhang mit den nachfolgenden Erläuterungen, insbesondere hinsichtlich einer Parametrierung von elektrischen Geräten, sollen neben den bereits erwähnten elektrischen Geräten 11a-i auch Kommunikationsgeräte, wie die Switche 15a, 15b, der Kommunikationskoppler 15c und die Kommunikationszugangseinrichtung 17 als elektrische Geräte angesehen werden.

Neben der in Figur 1 dargestellten kabelgebundenen oder drahtlosen Verbindung der elektrischen Geräte 11a-i in Form eines in Baumstruktur ausgebildeten Kommunikationsnetzwerks bzw. mittels einer Kommunikationszugangseinrichtung für drahtlose Kommunikation können auch andere Anschlussmöglichkeiten verwendet werden. Beispielsweise können die einzelnen elektrischen Geräte 11a-i jeweils direkt, d.h. ohne Zwischenschaltung einer zusätzlichen Kommunikationsstruktur, an das Kommunikationsnetzwerk 14 angeschlossen sein. Auch ist eine direkte Verbindung der einzelnen elektrischen Geräte 11a-i an die Recheneinrichtung 13 ist denkbar, sofern diese dafür geeignete Schnittstellen in ausreichender Menge bereitstellt.

Die Leitstellenanordnung 12 ist ebenfalls mit dem Kommunikationsnetzwerk 14 verbunden. Diese Verbindung kann unmittelbar oder mittelbar (z.B. über eine DSL-Verbindung) hergestellt sein. Auf diese Weise ist die Recheneinrichtung 13 auch mit der Leitstellenanordnung 12 verbunden. Dazu weist die Leitstellenanordnung 12 eine geeignete Schnittstelle (z.B. eine physikalische Ethernet-Schnittstelle) auf.

Zwischen den elektrischen Geräten 11a-i und der Recheneinrichtung 13 werden Nachrichten übertragen, die beispielsweise Messwerte von als Sensoren ausgebildeten elektrischen Geräten oder Steuerkommandos für als Aktoren ausgebildete elektrische Geräte beinhalten. Diese Nachrichten können gemäß unterschiedlichen Kommunikationsprotokollen ausgebildet sein, die von den jeweiligen elektrischen Geräten 11a-i unterstützt werden. Als Transport- bzw. Übermittlungsprotokoll kann beispielsweise TCP/IP gewählt sein, um für die Übermittlung der Nachrichten verbreitete Internettechnologie einsetzen zu können. Die elektrischen Geräte können zum Zwecke der Kommunikation beispielsweise individuell fest vorgegebene Kommunikationsadressen, z.B. IP-Adressen nach dem IPv6-Standard, aufweisen. Die Recheneinrichtung 13 speichert die mit den Nachrichten von den elektrischen Geräten empfangenen Daten und verknüpft diese mit einer Bezeichnung der jeweiligen elektrischen Geräte.

Zwischen der Recheneinrichtung 13 und der Leitstellenanordnung 12 werden ebenfalls Nachrichten übertragen, die beispielsweise von der Leitstelle durch Bedienhandlung des Bedienpersonals oder automatisch generierte Steuerkommandos für die elektrischen Geräte 11a-i oder einen Zustand von einer oder mehreren Komponenten der Anlage angebende Werte enthalten. Diese Nachrichten können z.B. gemäß einem Fernwirkprotokoll ausgebildet sein, das von der Leitstelle 12 unterstützt wird. Als Transport- bzw. Übermittlungsprotokoll kann beispielsweise TCP/IP gewählt sein, um auch für die Übermittlung der Nachrichten verbreitete Internettechnologie einsetzen zu können.

Die Recheneinrichtung 13 stellt geeignete Schnittstellen und Kommunikationsprotokolle für die Leitstellenanordnung 12 und die elektrischen Geräte 11a-i zur Verfügung. Da die Recheneinrichtung 13 in einer Datenverarbeitungs-Cloud ausgebildet ist, kann durch entsprechende Programmierung der Recheneinrichtung 13 eine einfache und flexible Anpassung an die jeweils geforderten Kommunikationsprotokolle erfolgen. Anpassungen auf Seiten der elektrischen Geräte 11a-i bzw. der Leitstellenanordnung 12 sind hingegen nicht erforderlich.

Die Recheneinrichtung 13 dient einerseits als Kommunikationsgateway, d.h. sie nimmt eine Protokollanpassung der Nachrichten zwischen den elektrischen Geräten und der Leitstellenanordnung vor. Darüber hinaus kann die Recheneinrichtung 13 anhand der in den Nachrichten der elektrischen Geräte enthaltenen Daten auch selbständige Automatisierungsfunktionen wahrnehmen, z.B. bei Überschreitung eines Schwellenwertes selbst eine Handlung auslösen. Zur Durchführung der jeweiligen Funktionen weist die Recheneinrichtung 13 ein oder mehrere Applikationsmodule mit einer entsprechenden Programmierung auf.

Die Recheneinrichtung 13 kann beispielsweise außerhalb des in Figur 1 angedeuteten Einflussbereichs 18a des Betreibers elektrischen Geräte 11a-h liegen und stattdessen einem (vom Betreiber der elektrischen Geräte verschiedenen) Betreiber der Datenverarbeitungs-Cloud zugeordnet sein, dessen Einflussbereich 18b ebenfalls in Figur 1 angedeutet ist. Auf diese Weise kann der Betreiber der Datenverarbeitungs-Cloud die Funktionen der Recheneinrichtung 13 dem Betreiber der elektrischen Geräte als Dienstleistung anbieten. Alternativ dazu kann die Datenverarbeitungs-Cloud natürlich auch von demselben Betreiber betrieben werden wie die elektrischen Geräte.

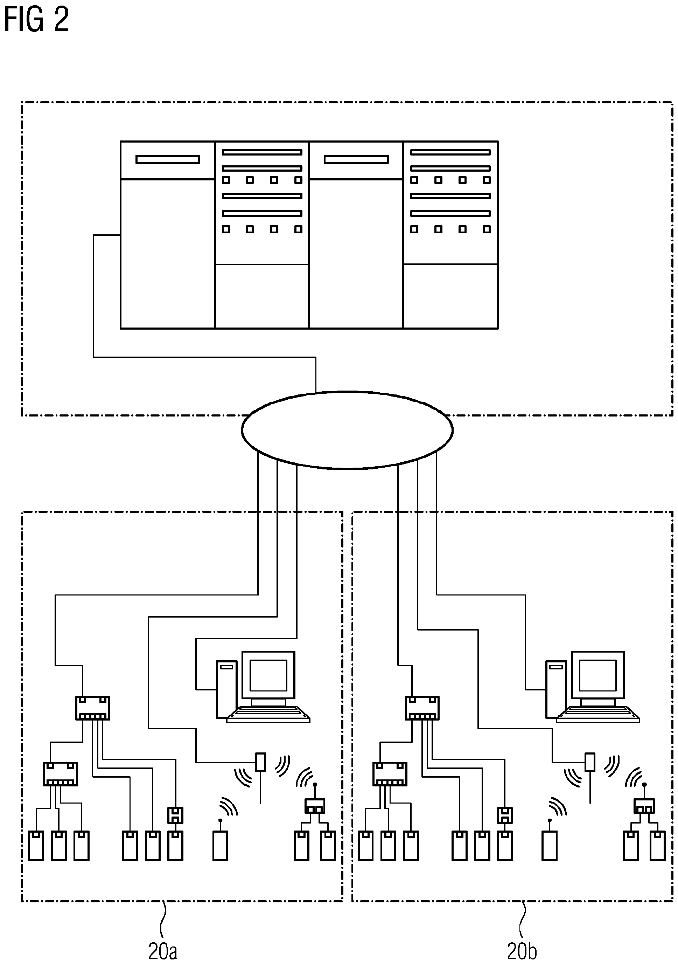

Figur 2 zeigt ein weiteres Ausführungsbeispiel eines Systems mit einer Recheneinrichtung 13. Die generelle Funktionsweise der Recheneinrichtung 13 sowie ihre Kommunikationsverbindungen mit elektrischen Geräten und Leitstellenanordnungen entsprechen der bereits zu Figur 1 erläuterten Funktionsweise. Die Datenverarbeitungs-Cloud steht in dem Ausführungsbeispiel gemäß Figur 2 jedoch mit zwei Anlagen 20a und 20b mit jeweiligen elektrischen Geräten in Verbindung. Die in der Datenverarbeitungs-Cloud ausgebildete Recheneinrichtung 13 weist daher zwei voneinander getrennte Datenbereiche auf, die gegeneinander hinsichtlich jeglicher Zugriffe abgesichert sind, so dass beispielsweise keine Schreib- und Lesezugriffe zwischen den einzelnen Datenbereichen stattfinden können. Darüber hinaus können die in den unterschiedlichen Datenbereichen vorliegenden Daten mit unterschiedlichen Betreiber-Schlüsseln verschlüsselt sein, die dem jeweiligen Betreiber der Anlagen 20a, 20b individuell zugeordnet sind, um die Datensicherheit weiter zu erhöhen. Die Recheneinrichtung 13 ist in dieser Ausführungsform derart ausgebildet, dass die für die beiden Anlagen 20a, 20b jeweils bereitgestellten Funktionalitäten und durchgeführten Handlungen jeweils nur in einem der betreffenden Anlage oder dem Betreiber der betreffenden Anlage zugeordneten Datenbereich ausgeführt werden. Somit kann die Recheneinrichtung 13 parallel Dienste für mehr als eine Anlage anbieten und ausführen. Die Anlagen 20a und 20b können hierbei von demselben oder von unterschiedlichen Betreibern betrieben werden. Die Datenverarbeitungs-Cloud kann von einem der Anlagenbetreiber oder einem Dritten betrieben werden.

Selbstverständlich ist die Recheneinrichtung 13 nicht auf den Betrieb für bis zu zwei Anlagen eingeschränkt; vielmehr können beliebige viele Anlagen an die Recheneinrichtung 13 angeschlossen sein, sofern die von der Datenverarbeitungs-Cloud bereitgestellte Leistung dies zulässt.

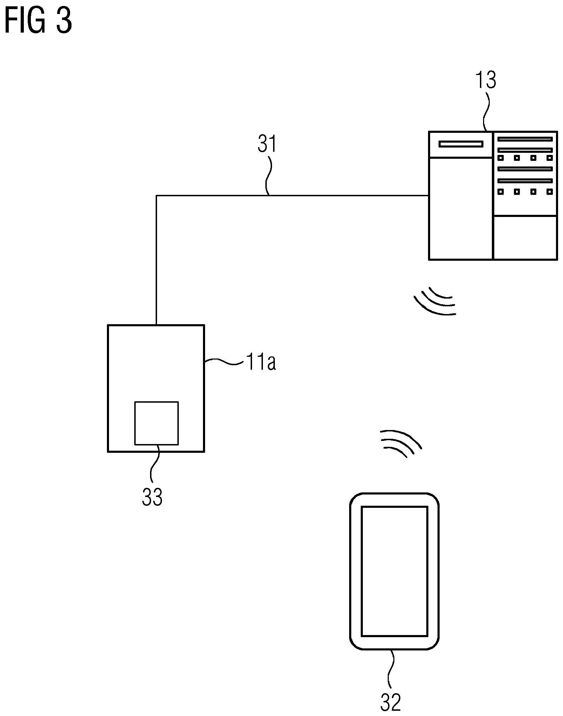

Zur Inbetriebnahme, beim Austauschen, bei veränderten Umgebungsbedingungen oder Funktionsanforderungen und zur Pflege und Wartung müssen die elektrischen Geräte parametriert werden. Dabei werden Geräteeinstellungen für den Betrieb der elektrischen Geräte festgelegt. Die Vorgehensweise zur Parametrierung wird nachfolgend unter Bezugnahme auf Figuren 3 bis 6 beispielhaft erläutert.

Hierzu zeigt Figur 3 beispielhaft ein elektrisches Gerät 11a. Das elektrische Gerät 11a ist über eine nur schematisch angedeutete Kommunikationsverbindung 31, die beispielsweise entsprechend der Erläuterungen zu Figur 1 ausgebildet sein kann, mit der Recheneinrichtung 13 verbunden.

Zum Parametrieren des elektrischen Geräts 11a wird außerdem eine Benutzer-Einheit 32 eingesetzt, bei der es sich beispielsweise um ein Smartphone oder eine tragbare Datenverarbeitungseinrichtung (Laptop, Tablet etc.) handeln kann. Auf der Benutzer-Einheit ist ein Anwendungsprogramm installiert (z.B. eine sogenannte "APP"), die dazu geeignet ist, eine Bedienoberfläche eines Parametrierprogramms, das auf der Recheneinrichtung 13 ausgeführt wird, anzuzeigen und diesbezüglich benutzerseitige Einstellungen zu erfassen. Bei dem Anwendungsprogramm kann es sich beispielsweise um einen Browser handeln. Es kann aber auch als spezifisches anderes Programm ausgebildet sein.

Die Benutzer-Einheit 32 führt im Zusammenspiel mit der Recheneinrichtung 13 die Schritte zur Parametrierung des elektrischen Gerätes 11a durch, die beim Einbau und Inbetriebnahme des elektrischen Gerätes 11a erforderlich sind. Dazu steht die Benutzer-Einheit 32, beispielsweise über eine in Figur 3 nur schematisch angedeutete drahtlose Kommunikationsverbindung (Mobilfunk, WLAN, WiFi, etc.), mit der Recheneinrichtung 13 in Verbindung. Zwischen der Benutzer-Einheit 32 und dem elektrischen Gerät 11a muss hingegen keine Kommunikationsverbindung bestehen.

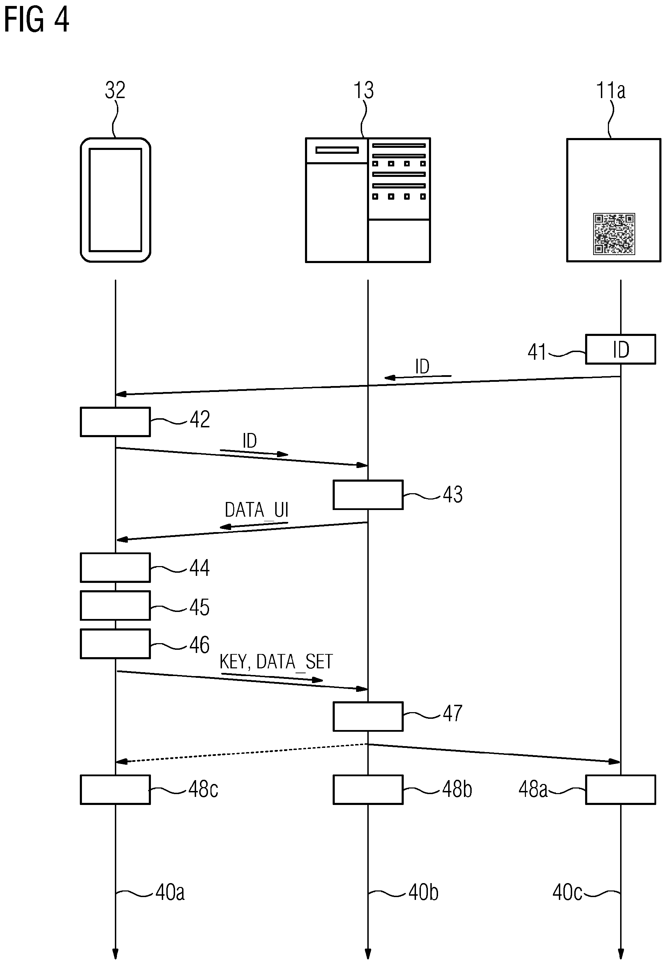

Ein Ausführungsbeispiel eines Verfahrens zum Parametrieren eines elektrischen Gerätes wird nachfolgend unter Hinzunahme von Figur 4 erläutert.

Figur 4 zeigt hierzu ein Ablaufschema eines solchen Verfahrens. Dazu sind in Figur 4 drei Zeitstrahle 40a-c dargestellt. Der Zeitstrahl 40a zeigt die Verfahrensschritte, die im Zusammenhang mit der Benutzer-Einheit 11a ausgeführt werden, der Zeitstrahl 40b zeigt die Verfahrensschritte, die im Zusammenhang mit der Recheneinrichtung 13 ausgeführt werden, und Zeitstrahl 40c zeigt die Verfahrensschritte, die im Zusammenhang mit dem elektrischen Gerät 11a ausgeführt werden.

Zunächst stellt in Schritt 41 das elektrische Gerät 11a eine Identifizierungsinformation ID zur Verfügung, die eine eindeutige Identifizierung des elektrischen Gerätes 11a ermöglicht. Dabei kann es sich z.B. um eine Seriennummer, einen eindeutigen Gerätenamen oder eine eindeutige Kommunikationsadresse (z.B. MAC-Adresse, IP-Adresse) handeln. Bevorzugt ist eine solche Identifizierungsinformation ID mittels eines optisch lesbaren Codes 33 codiert (vgl. Figur 3), der auf dem elektrischen Gerät angebracht ist (z.B. ein Barcode oder QR-Code, der aufgedruckt oder per Aufkleber befestigt ist) oder mittels einer Anzeigeeinrichtung des elektrischen Gerätes dargestellt wird. Beispielsweise kann vorgesehen sein, dass elektrische Geräte in Form von intelligenten Sensoren und Aktoren ab Werk einen Bar- oder QR-Code erhalten, mit dem die Identifizierungsinformation ID in Form einer Seriennummer des Gerätes codiert wird.

Die Identifizierungsinformation ID wird in einem nachfolgenden Schritt 42 von der Benutzer-Einheit 32 erfasst und ausgewertet. Beispielsweise kann dies durch optisches Einlesen, z.B. mittels einer Kamera der Benutzer-Einheit 32, erfolgen. Die Benutzer-Einheit decodiert in diesem Fall den optisch eingelesenen Code und ermittelt daraus die Identifizierungsinformation ID. Selbstverständlich kann die Identifizierungsinformation ID von der Benutzer-Einheit 32 auch auf anderem Wege erfasst werden, beispielsweise durch manuelle Benutzereingabe oder mittels einer Nahfeldkommunikation (Infrarot, Bluetooth, Near Field Communication - NFC).

Nach dem Erfassen der Identifizierungsinformation baut die Benutzer-Einheit 32 mit der Recheneinrichtung 13 eine Kommunikationsverbindung auf und überträgt die Identifizierungsinformation ID an die Recheneinrichtung 13.

Die Recheneinrichtung 13 führt daraufhin Schritt 43 aus und wählt dabei aus einer Mehrzahl von Parametrierprogrammen anhand der empfangenen Identifizierungsinformation ID ein für das elektrische Gerät geeignetes Parametrierprogramm aus oder passt ein universelles Parametrierprogramm anhand der empfangenen Identifizierungsinformation ID derart an, dass es zur Parametrierung des elektrischen Gerätes 11a geeignet ist. Bei der Ausführung dieses Parametrierprogramms durch die Recheneinrichtung 13 werden erste Daten (DATA_UI) erzeugt, die zur Erzeugung einer Bedienoberfläche für das Parametrierprogramm geeignet sind. Diese ersten Daten können z.B. ein browserlesbares Datenformat (HTML, XML, etc.) besitzen und zur Erzeugung einer Bedienoberfläche dienen, die einem Benutzer vor Ort (d.h. in der Nähe des elektrischen Gerätes 11a) alle relevanten Geräteeinstellungen anzeigt, die bei der Installation des Gerätes eingegeben werden müssen. Die ersten Daten werden daraufhin an die Benutzer-Einheit 32 übertragen.

In Schritt 44 erzeugt die Benutzer-Einheit 32 mittels des Anwendungsprogramms die Bedienoberfläche und zeigt diese auf einer Anzeigevorrichtung (z.B. Display, Monitor) an. Die Bedienoberfläche erlaubt es einem Benutzer, alle relevanten Geräteeinstellungen einzugeben.

In einem nächsten Schritt 45 erfasst die Benutzer-Einheit 32 benutzerseitig über die Bedienoberfläche eingegebene Einstellungen für das elektrische Gerät. Diese können unter anderem beispielsweise umfassen:
- Name des Gerätes;
- Name einer Station oder Anlage, in der das Gerät eingebaut wird;
- Name der Komponenten der Station oder Anlage, die dem Gerät zugeordnet werden (z.B. elektrische Leitungen);
- geografischer Einbauort;
- dynamische Parameter, die erst bei der Montage bekannt werden (z.B. Stromschwellwerte).

Das Anwendungsprogramm ermöglicht es, dass die Bedienoberfläche für die Parametrierung z.B. als Browserseiten innerhalb des Anwendungsprogramms läuft. Damit kann die Bedienoberfläche, zum Beispiel bei Firmware-Änderungen des elektrischen Gerätes, schnell und einfach angepasst werden. Ein Aktualisieren (z.B. Update) des Anwendungsprogramms auf der Benutzer-Einheit ist in diesem Fall nicht erforderlich, da alle Anpassungen auf Seiten der Recheneinrichtung 13 vorgenommen werden.

Sofern die Benutzer-Einheit 32 über einen Geosensor (z.B. GPS-Modul) verfügt, kann das Anwendungsprogramm außerdem die geografische Information über den Geosensor erfassen und als Einstellung in die Bedienoberfläche eintragen (Schritt 46).

Die Einstellungen werden dann als zweite Daten (DATA_SET) von der Benutzer-Einheit 32 an die Recheneinrichtung 13 übertragen. Beispielsweise handelt es sich bei den zweiten Daten um seitens des Benutzers ausgefüllte Browserseiten im HTML oder XML-Format.

Die Recheneinrichtung 13 empfängt die zweiten Daten und erzeugt aus den enthaltenen Einstellungen Einstellwerte für das elektrische Gerät (Schritt 47). Beispielsweise können die Einstellwerte durch Eintragungen in einem für das elektrische Gerät spezifischen Parametrier-Template erfolgen. Im einfachsten Fall ist das elektrische Gerät auch in der Lage, die zweiten Daten ohne weitere Veränderung zu lesen, dann können die zweiten Daten unmittelbar als Einstellwerte übernommen werden (z.B. in Form einer XML-Datei).

Danach wird eine Parametrierdatei, die die Einstellwerte umfasst, von der Recheneinrichtung 13 an das elektrische Gerät 11a übertragen. Das elektrische Gerät 11a übernimmt die in den Einstellwerten enthaltenen Geräteeinstellungen und schließt damit die Parametrierung ab (Schritt 48a). Die Recheneinrichtung speichert die Parametrierdatei auch lokal ab (Schritt 48b). Die Parametrierdatei kann optional auch an die Benutzer-Einheit 32 übertragen und dort abgespeichert werden (Schritt 48c).

Nach Abschluss der Parametrierung kann das elektrische Gerät 11a in Betrieb gehen und dabei mit der Recheneinrichtung wie oben beschrieben Nachrichten austauschen.

Mit den zweiten Daten DATA SET kann von der Benutzer-Einheit 32 auch ein den Betreiber des elektrischen Gerätes angebender Betreiber-Schlüssel KEY an die Recheneinrichtung 13 übertragen werden. Mit diesem Betreiber-Schlüssel wird der Betreiber des elektrischen Gerätes 11a auf der Recheneinrichtung 13 identifiziert. Die Recheneinrichtung 13 speichert daraufhin in Schritt 48c die Parametrierdatei unter Verwendung des Betreiber-Schlüssels derart, dass nur der Betreiber und ggf. elektrische Geräte des Betreibers darauf Zugriff haben. Außerdem wird die Identifizierungsinformation des elektrischen Gerätes mit dem Betreiber-Schlüssel verknüpft, so dass alle im Betrieb des elektrischen Gerätes zur Recheneinrichtung 13 gesendeten Daten unter Verwendung des Betreiber-Schlüssels gesichert abgespeichert werden. Damit ist sichergestellt, dass die Informationen und Daten des Gerätes nur von dem Betreiber, z.B. mittels der Leitstelleneinrichtung 12 (vgl. Figur 1) gelesen und bearbeitet werden können, dem diese Geräte auch gehören.

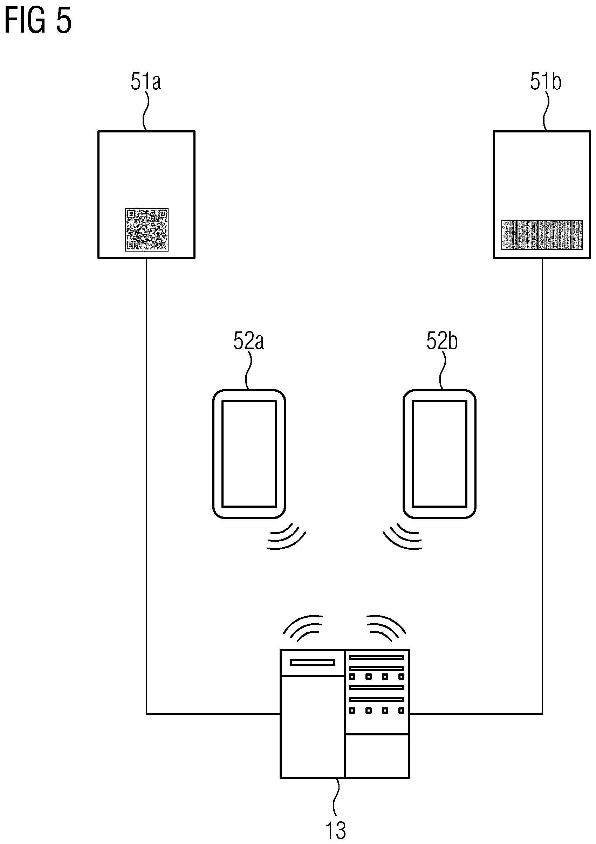

Dieser Zusammenhang ist in Figur 5 schematisch erläutert. Figur 5 zeigt eine Recheneinrichtung, die mit zwei elektrischen Geräten 51a und 51b verbunden ist. Das elektrische Gerät 51a gehört zu einer in Figur 5 nicht dargestellten ersten Anlage und wird von einem ersten Betreiber betrieben. Das elektrische Gerät 51a gehört zu einer in Figur 5 nicht dargestellten zweiten Anlage und wird von einem zweiten Betreiber betrieben, der von dem ersten Betreiber verschieden ist. Die Recheneinrichtung weist nun wie oben dargestellt zwei unterschiedliche, voneinander abgetrennte und gegen Zugriffe aufeinander abgesicherte Datenbereiche auf, von denen einer dem ersten Betreiber und der andere dem zweiten Betreiber zugeordnet ist. Die beiden Datenbereiche sind hierzu unter Verwendung jeweiliger Betreiber-Schlüssel gesichert. Jedem Betreiber ist außerdem eine Benutzer-Einheit 52a bzw. 52b zugewiesen. Die Benutzer-Einheit 52a umfasst hierzu den Betreiber-Schlüssel des ersten Betreibers, während die Benutzer-Einheit 52b den Betreiber-Schlüssel des zweiten Betreibers aufweist. Die Recheneinrichtung 13 sorgt nun über die voneinander getrennten Datenbereiche dafür, dass die Daten des ersten elektrischen Gerätes nur auf demjenigen Datenbereich, der dem ersten Betreiber zugeordnet ist, gespeichert werden und nur von dem ersten Betreiber bei Kenntnis des ersten Betreiber-Schlüssels gelesen und bearbeitet werden können. Außerdem kann die erste Benutzer-Einheit 52a nur eine Parametrierung des ersten elektrischen Gerätes 51a vornehmen, da sie nur den ersten Betreiber-Schlüssel kennt. Entsprechend werden die Daten des zweiten elektrischen Gerätes nur auf demjenigen Datenbereich gespeichert, der dem zweiten Betreiber zugeordnet ist, und können nur von dem zweiten Betreiber bei Kenntnis des zweiten Betreiber-Schlüssels gelesen und bearbeitet werden. Außerdem kann die zweite Benutzer-Einheit 52a nur eine Parametrierung des zweiten elektrischen Gerätes 51a vornehmen, da sie nur den zweiten Betreiber-Schlüssel kennt. Auf diese Weise kann eine einzige Recheneinrichtung 13 zum Betreiben von Anlagen mehrerer Betreiber eingesetzt werden. Die Anzahl von Betreibern ist dabei selbstverständlich nicht auf zwei begrenzt.

Die Vergabe des Schlüssels an das Anwendungsprogramm auf der Benutzer-Einheit kann z.B. analog zu aus dem Bereich des Online-Bankings bekannten Schlüsselzuteilungsverfahren erfolgen.

Die Sicherheit des oben genannten Authentifizierungsmechanismus kann noch weiter erhöht werden, wenn die Recheneinrichtung mit einer Vertriebsplattform zusammenwirkt, über die neue elektrische Geräte an den Betreiber verkauft werden können, oder eine solche Vertriebsplattform ausbildet. In diesem Fall könnte die Identifizierungsinformation eines neuen Gerätes bereits bei der Auslieferung mit dem Betreiber-Schlüssel des Betreibers verknüpft werden. Dann könnte die Parametrierung nur von autorisierten Benutzer-Einheiten vorgenommen werden, die ebenfalls über den Betreiber-Schlüssel verfügen.

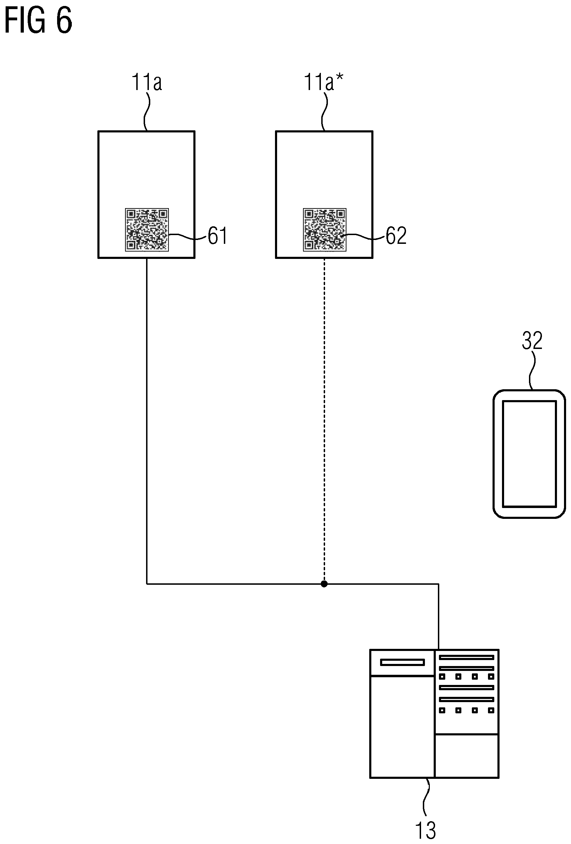

Figur 6 zeigt schließlich eine schematische Darstellung eines Systems mit einer Recheneinrichtung 13, einer Benutzer-Einheit 32 und einem elektrischen Gerät 11a, das - z.B. aufgrund eines Defektes - durch ein anderes elektrisches Gerät 11a* ersetzt werden soll. Hierbei unterstützt die Recheneinrichtung 13 in Zusammenwirken mit der Benutzer-Einheit 32 die nachfolgend erläuterte Vorgehensweise.

Zunächst wird je eine Identifizierungsinformation der beiden elektrischen Geräte, also des auszutauschenden elektrischen Gerätes 11a und des Austausch-Gerätes 11a* erfasst. Dies kann beispielsweise durch optische Erfassung von auf den beiden Geräten 11a, 11a* angebrachten QR-Codes 61, 62 mittels des Benutzer-Einheit 32 erfolgen. Mittels des Anwendungsprogramms auf der Benutzer-Einheit 32 wird außerdem eine benutzerseitige Eingabe erfasst, die angibt, dass das elektrische Gerät 11a durch das andere elektrische Gerät 11a* ausgetauscht werden soll. Die Reihenfolge der soeben beschriebenen Schritte kann dabei beliebig gewählt werden.

Die Benutzer-Einheit 32 sendet daraufhin die Identifizierungsinformationen beider Geräte 11a, 11a* an die Recheneinrichtung 13. Die Recheneinrichtung 13 kann optional eine Prüfung durchführen, ob das andere Gerät 11a* überhaupt die Funktionen des bisherigen Gerätes 11a übernehmen kann. Falls dies so ist, erzeugt die Recheneinrichtung 13 die für die Parametrierung des anderen Gerätes 11a* erforderliche Bedienoberfläche (z.B. in Form von Browser-Seiten). Dabei werden jedoch die Einstellwerte des bisherigen Gerätes 11a übernommen und bereits eingetragen. Das Austausch-Gerät 11a* wird dann mit der Recheneinrichtung 13 verbunden (z.B. durch Verbinden mit einem für die Kommunikation mit der Recheneinrichtung verwendeten Kommunikationsnetzes). Die Verbindung zwischen dem ausgetauschten Gerät 11a und der Recheneinrichtung 13 kann getrennt werden.

Sofern keine weiteren Einstellungen erforderlich sind, kann die Recheneinrichtung 13 die zugehörige Parametrierdatei direkt an das Austausch-Gerät 11a* übermitteln und/oder die Parametrierdatei für das Austausch-Gerät 11a* speichern. Optional kann zuvor eine Freigabe des Benutzers der Benutzer-Einheit 32 über die dort dargestellte Bedienoberfläche eingeholt werden. Dabei kann beispielsweise auch der Betreiber-Schlüssel von der Benutzer-Einheit 32 abgefragt werden.

Sofern nicht alle benötigten Einstellwerte durch die Übernahme von dem auszutauschenden Gerät 11a vorliegen, werden die fehlenden Einstellungen über die auf der Benutzer-Einheit 32 dargestellte Benutzeroberfläche abgefragt und an die Recheneinrichtung 13 übertragen. Die weitere Parametrierung erfolgt wie oben bereits beschrieben.

Etwaige bereits im Zusammenhang mit dem alten Gerät 11a auf der Recheneinrichtung 13 gespeicherte Daten, z.B. Messwerte, Statuswerte, werden nunmehr der Identifizierungsinformation des neuen Gerätes 11a* zugeordnet.

Darüber hinaus kann die Benutzer-Einheit 32 auch zum Aktualisieren (Update) einer Gerätesoftware eines elektrischen Gerätes genutzt werden. Dabei werden folgende Schritte durchgeführt: Zunächst wird die Identifizierungsinformation eines elektrischen Gerätes erfasst (z.B. durch Einlesen eines Barcodes/QR-Codes). Diese Identifizierungsinformation wird gemeinsam mit einer Gerätesoftware-Aktualisierungsanfrage von der Benutzer-Einheit 32 an die Recheneinrichtung 13 übertragen. Die Recheneinrichtung 13 ermittelt anhand der übertragenen Identifizierungsinformation die aktuelle Gerätesoftware-Version und sendet diese an die Benutzer-Einheit. Dort wird sie dem Benutzer angezeigt. Außerdem kann eine aktuell auf dem Gerät vorhandene Version der Gerätesoftware angezeigt werden. Auf Aufforderung durch den Benutzer oder automatisch kann dann die Benutzer-Einheit 32 die Recheneinrichtung 13 auffordern, ein Softwareupdate für das elektrische Gerät auszuführen.

Alternativ kann auch vorgesehen sein, dass der Benutzer über die Benutzer-Einheit 32 die Recheneinrichtung 13 anweist, Aktualisierungen der Gerätesoftware automatisch auf das jeweilige elektrische Geräte zu übertragen. In diesem Fall ist eine Freigabe durch den Benutzer nicht erforderlich.

## Patentansprüche

1. Verfahren zum Parametrieren eines elektrischen Gerätes (11a-h), bei dem
- eine Kommunikationsverbindung zwischen einer Benutzer-Einheit (32) und einer Recheneinrichtung (13) aufgebaut wird, wobei von der Recheneinrichtung (13) ein Parametrierprogramm zum Parametrieren des elektrischen Gerätes (11a) bereitgestellt wird;
- mittels der Benutzer-Einheit (32) benutzerseitig vorgenommene Einstellungen, die das elektrische Gerät (11a-h) betreffen, erfasst werden; und
- unter Verwendung der erfassten Einstellungen Einstellwerte zur Parametrierung des elektrischen Gerätes (11a-h) gebildet und eine die Einstellwerte enthaltene Parametrierdatei für das elektrische Gerät (11a-h) erzeugt wird; wobei das Parametrierprogramm zum Parametrieren des elektrischen Gerätes (11a-h) von der Recheneinrichtung (13) ausführt wird, wobei eine Bedienoberfläche für das Parametrierprogramm mittels der Benutzer-Einheit (32) angezeigt wird,
**dadurch gekennzeichnet, dass**
- in der Benutzer-Einheit (32) ein dem Betreiber des elektrischen Gerätes (11a-h) zugeordneter eindeutiger digitaler Betreiber-Schlüssel gespeichert ist und die Benutzer-Einheit (32) den Schlüssel an die Recheneinrichtung (13) sendet; und
- die Recheneinrichtung (13) unter Verwendung des Betreiber-Schlüssels die Einstellwerte und/oder die Parametrierdatei und/oder weitere auf das elektrische Gerät (11a-h) bezogene Informationen und/oder von dem elektrischen Gerät (11a-h) im Betrieb empfangene Daten verschlüsselt abspeichert; oder
- die Recheneinrichtung (13) die Einstellwerte und/oder die Parametrierdatei und/oder weitere auf das elektrische Gerät (11a-h) bezogene Informationen und/oder von dem elektrischen Gerät (11a-h) im Betrieb empfangene Daten in einem unter Verwendung des Betreiber-Schlüssels zugriffsgeschützten Bereich abspeichert.

2. Verfahren nach Anspruch 1,
**dadurch gekennzeichnet, dass**
- beim Ausführen des Parametrierprogramms von der Recheneinrichtung (13) erste Daten, die zur Erzeugung der Bedienoberfläche für das Parametrierprogramm geeignet sind, an die Benutzer-Einheit (32) übertragen werden;
- mittels der Benutzer-Einheit (32) unter Verwendung der empfangenden ersten Daten die Bedienoberfläche zur Erfassung der benutzerseitigen Einstellungen erzeugt und angezeigt wird;
- zweite Daten, die die erfassten benutzerseitig vorgenommenen Einstellungen angeben, von der Benutzer-Einheit (32) an die Recheneinrichtung (13) übertragen werden;
- mittels der Recheneinrichtung (13) unter Verwendung der empfangenen zweiten Daten die Einstellwerte für das elektrische Gerät (11a-h) gebildet werden; und
- mittels der Recheneinrichtung (13) unter Verwendung der gebildeten Einstellwerte die Parametrierdatei erzeugt wird.

3. Verfahren nach Anspruch 1 oder 2,
**dadurch gekennzeichnet, dass**
- zumindest Teile der Parametrierdatei von der Recheneinrichtung (13) an das elektrische Gerät (11a-h) übertragen werden.

4. Verfahren nach einem der vorangehenden Ansprüche,
**dadurch gekennzeichnet, dass**
- mit der Benutzer-Einheit (32) eine Identifizierungsinformation des elektrischen Gerätes (11a-h) erfasst wird;
- die Identifizierungsinformation des elektrischen Gerätes (11a-h) von der Benutzer-Einheit (32) an die Recheneinrichtung (13) übertragen wird; und
- die Recheneinrichtung (13) das Parametrierprogramm unter Verwendung der Identifizierungsinformation derart anpasst, dass es zum Parametrieren des Geräts (11a-h) geeignet ist, oder aus einer Mehrzahl von Parametrierprogrammen ein zum Parametrieren des Gerätes (11a-h) geeignetes auswählt.

5. Verfahren nach Anspruch 4,
**dadurch gekennzeichnet, dass**
- die Recheneinrichtung (13) unter Verwendung der Identifizierungsinformation weitere auf das elektrische Gerät (11a-h) bezogene Informationen ermittelt.

6. Verfahren nach einem der vorangehenden Ansprüche,
**dadurch gekennzeichnet, dass**
- die Recheneinrichtung (13) in einer Datenverarbeitungs-Cloud bereitgestellt wird.

7. Verfahren nach einem der vorangehenden Ansprüche,
**dadurch gekennzeichnet, dass**
- bei einer Anschaffung eines neuen elektrischen Gerätes (11a-h) durch den Betreiber die Recheneinrichtung (13) eine Identifizierungsinformation des neuen elektrischen Gerätes (11a-h) mit einem Betreiber-Schlüssel des Betreibers verknüpft und abspeichert; und
- bei einer Parametrierung des neuen elektrischen Gerätes (11a-h) die Recheneinrichtung (13) nur solche Einstellungen für das neue elektrische Gerät (11a-h) akzeptiert, die von einer Benutzer-Einheit (32) stammen, die über denselben Betreiber-Schlüssel verfügt.

8. Verfahren nach einem der vorangehenden Ansprüche,
**dadurch gekennzeichnet, dass**
- nach Abschluss der Parametrierung des elektrischen Geräts (11a-h) mit der Benutzer-Einheit (32) von der Recheneinrichtung (13) eine Software-Information abgerufen wird, die einen Versionsstand einer aktuellen Gerätesoftware für das elektrische Gerät (11a-h) angibt; und
- die Benutzer-Einheit (32) die Software-Information anzeigt und auf benutzerseitigen Befehl oder automatisch eine Aktualisierungs-Aufforderung an die Recheneinrichtung (13) versendet, um die Recheneinrichtung (13) zum Übertragen der aktuellen Gerätesoftware an das elektrische Gerät (11a-h) zu veranlassen.

9. Verfahren nach einem der vorangehenden Ansprüche,
**dadurch gekennzeichnet, dass**
- nach Abschluss der Parametrierung des elektrischen Geräts (11a-h) für den Fall, dass das elektrische Gerät (11a-h) durch ein anderes elektrisches Gerät (11a*) zu ersetzen ist, die Benutzer-Einheit (32) an die Recheneinrichtung (13) eine Identifizierungsinformation des elektrischen Gerätes (11a-h) und eine Identifizierungsinformation des anderen elektrischen Gerätes (11a*) sendet;
- die Recheneinrichtung (13) die Einstellwerte des elektrischen Gerätes (11a-h) als Einstellwerte für das andere elektrische Gerät (11a*) übernimmt.

10. Recheneinrichtung (13) zum Parametrieren eines elektrischen Gerätes (11a-h), die dazu eingerichtet ist,
- ein Parametrierprogramm zum Parametrieren des elektrischen Gerätes (11a-h) bereitzustellen; und
- mit einer Benutzer-Einheit (32), die zur Eingabe von Einstellungen für das elektrische Gerät (11a-h) eingerichtet ist, zu kommunizieren; wobei
die Recheneinrichtung (13) dazu ausgebildet ist, das Parametrierprogramm zum Parametrieren des elektrischen Gerätes (11a-h) von der Recheneinrichtung (13) auszuführen und bei der Ausführung des Parametrierprogramms eine Bedienoberfläche für das Parametrierprogramm zur Anzeige und benutzerseitigen Eingabe von Einstellungen für das elektrische Gerät (11a-h) an die Benutzer-Einheit (32) zu übertragen,
**dadurch gekennzeichnet, dass** die Recheneinrichtung (13) dazu ausgebildet ist,
- von der Benutzer-Einheit (32) einen dem Betreiber des elektrischen Gerätes zugeordneten eindeutigen digitalen Betreiber-Schlüssel zu empfangen;
- unter Verwendung des Betreiber-Schlüssels die Einstellwerte und/oder die Parametrierdatei und/oder weitere auf das elektrische Gerät (11a-h) bezogene Informationen und/oder von dem elektrischen Gerät (11a-h) im Betrieb empfangene Daten verschlüsselt abzuspeichern; oder
- die Einstellwerte und/oder die Parametrierdatei und/oder weitere auf das elektrische Gerät (11a-h) bezogene Informationen und/oder von dem elektrischen Gerät (11a-h) im Betrieb empfangene Daten in einem unter Verwendung des Betreiber-Schlüssels zugriffsgeschützten Bereich abzuspeichern.

11. Recheneinrichtung (13) nach Anspruch 10,
**dadurch gekennzeichnet, dass**
- die Recheneinrichtung (13) in einer Datenverarbeitungs-Cloud ausgebildet ist.

12. Benutzer-Einheit (32) zum Parametrieren eines elektrischen Gerätes (11a-h), die dazu eingerichtet ist,
- eine Kommunikationsverbindung mit einer Recheneinrichtung (13) aufzubauen, die ein Parametrierprogramm zum Parametrieren des elektrischen Gerätes (11a-h) bereitstellt; und
- benutzerseitig vorgenommene Einstellungen, die das elektrische Gerät (11a-h) betreffen, zu erfassen; wobei die Benutzer-Einheit (32) dazu eingerichtet ist, mit der Recheneinrichtung (13), die das Parametrierprogramm zum Parametrieren des elektrischen Gerätes (11a-h) ausführt, derart zusammenzuwirken, dass eine Bedienoberfläche für das Parametrierprogramm zur Erfassung benutzerseitiger Einstellungen mittels der Benutzer-Einheit (32) angezeigt wird **dadurch gekennzeichnet, dass** in der Benutzer-Einheit (32) ein dem Betreiber des elektrischen Gerätes zugeordneter eindeutiger digitaler Schlüssel gespeichert ist, den die Benutzer-Einheit zum Parametrieren des elektrischen Gerätes an die Recheneinrichtung (13) sendet.

13. Benutzer-Einheit (32) nach Anspruch 12,
**dadurch gekennzeichnet, dass**
- die Benutzer-Einheit (32) als mobiles Kommunikationsgerät oder tragbare Datenverarbeitungseinrichtung ausgebildet ist.

14. System zum Parametrieren eines elektrischen Gerätes (11a-h) mit einer Recheneinrichtung (13), die ein Parametrierprogramm zum Parametrieren des elektrischen Gerätes (11a-h) bereitstellt, und einer Benutzer-Einheit (32);
**dadurch gekennzeichnet, dass**
- die Recheneinrichtung (13) nach Anspruch 10 oder 11 ausgebildet ist;
- die Benutzer-Einheit (32) nach Anspruch 12 oder 13 ausgebildet ist; und
- die Recheneinrichtung (13) und die Benutzer-Einheit (32) dazu eingerichtet sind, ein Verfahren nach einem der Ansprüche 1 bis 9 durchzuführen.

## Claims

1. Method for parameterizing an electrical device (11a-h), in which
- a communication link is set up between a user unit (32) and a computation apparatus (13), wherein the computation apparatus (13) provides a parameterization program for parameterizing the electrical device (11a);
- the user unit (32) is used to record settings made at the user end that affect the electrical device (11a-h); and
- the recorded settings are used to form setting values for parameterizing the electrical device (11a-h), and a parameterization file containing the setting values is produced for the electrical device (11a-h);
wherein the parameterization program for parameterizing the electrical device (11a-h) is executed by the computation apparatus (13), with a user interface for the parameterization program being displayed by means of the user unit (32),
**characterized in that**
- the user unit (32) stores an explicit digital operator key associated with the operator of the electrical device (11a-h), and the user unit (32) sends the key to the computation apparatus (13); and
- the computation apparatus (13) uses the operator key to store the setting values and/or the parameterization file and/or further information items relating to the electrical device (lla-h) and/or data received from the electrical device (lla-h) during operation in encrypted form; or
- the computation apparatus (13) stores the setting values and/or the parameterization file and/or further information items relating to the electrical device (11a-h) and/or data received from the electrical device (11a-h) during operation in an area that is access-protected using the operator key.

2. Method according to Claim 1,
**characterized in that**
- the execution of the parameterization program prompts the computation apparatus (13) to transmit first data, which are suitable for producing the user interface for the parameterization program, to the user unit (32);
- the user unit (32) is used to use the received first data to produce and display the user interface for recording the user settings;
- second data, which indicate the recorded settings made by the user, are transmitted from the user unit (32) to the computation apparatus (13);
- the computation apparatus (13) is used to use the received second data to form the setting values for the electrical device (11a-h); and
- the computation apparatus (13) is used to use the formed setting values to produce the parameterization file.

3. Method according to Claim 1 or 2,
**characterized in that**
- at least portions of the parameterization file are transmitted from the computation apparatus (13) to the electrical device (11a-h).

4. Method according to one of the preceding claims,
**characterized in that**
- the user unit (32) is used to record an identification information item for the electrical device (11a-h);
- the identification information item of the electrical device (11a-h) is transmitted from the user unit (32) to the computation apparatus (13); and
- the computation apparatus (13) adjusts the parameterization program using the identification information item such that it is suitable for parameterizing the device (11a-h), or selects, from a plurality of parameterization programs, one that is suitable for parameterizing the device (11a-h).

5. Method according to claim 4,
**characterized in that**
- the computation apparatus (13) uses the identification information item to ascertain further information items relating to the electrical device (11a-h).

6. Method according to one of the preceding claims,
**characterized in that**
- the computation apparatus (13) is provided in a data processing cloud.

7. Method according to one of the preceding claims,
**characterized in that**
- acquisition of a new electrical device (11a-h) by the operator prompts the computation apparatus (13) to logically combine an identification information item of the new electrical device (11a-h) with an operator key of the operator and to store them; and
- parameterization of the new electrical device (11a-h) prompts the computation apparatus (13) to accept only such settings for the new electrical device (11a-h) as come from a user unit (32) that has the same operator key.

8. Method according to one of the preceding claims,
**characterized in that**
- conclusion of the parameterization of the electrical device (lla-h) is followed by the user unit (32) being used to retrieve from the computation apparatus (13) a software information item that indicates a version number for an up-to-date piece of device software for the electrical device (11a-h); and
- the user unit (32) displays the software information item and, on a command from the user or automatically, sends an update request to the computation apparatus (13) in order to prompt the computation apparatus (13) to transmit the up-to-date device software to the electrical device (11a-h).

9. Method according to one of the preceding claims,
**characterized in that**
- conclusion of the parameterization of the electrical device (11a-h) when the electrical device (11a-h) needs to be replaced by another electrical device (11a*) is followed by the user unit (32) sending to the computation apparatus (13) an identification information item for the electrical device (11a-h) and an identification information item for the other electrical device (11a*);
- the computation apparatus (13) adopts the setting values of the electrical device (11a-h) as setting values for the other electrical device (11a*).

10. Computation apparatus (13) for parameterizing an electrical device (11a-h), which is set up
- to provide a parameterization program for parameterizing the electrical device (11a-h); and
- to communicate with a user unit (32) that is set up to input settings for the electrical device (11a-h); with
wherein the computation apparatus (13) is designed to execute the parameterization program for parameterizing the electrical device (11a-h) and, during the execution of the parameterization program, to transmit a user interface for the parameterization program for the display and user input of settings for the electrical device (11a-h) to the user unit (32),
**characterized in that**
the computation apparatus (13) is designed
- to receive an explicit digital operator key associated with the operator of the electrical device from the user unit (32) ;
- to use the operator key to store the setting values and/or the parameterization file and/or further information items relating to the electrical device (11a-b) and/to data received from the electrical device (11a-h) during operation in encrypted form; or
- to store the setting values and/or the parameterization file and/or further information items relating to the electrical device (11a-h) and/or data received from the electrical device (11a-h) during operation in an area that is access protected using the operator key.

11. Computation apparatus (13) according to Claim 10,
**characterized in that**
- the computation apparatus (13) is formed in a data processing cloud.

12. User unit (32) for parameterizing an electrical device (11a-h), which is set up
- to set up a communication link to a computation apparatus (13) that provides a parameterization program for parameterizing the electrical device (11a-h); and
- to record settings made by the user that affect the electrical device (11a-h); wherein
the user unit (32) is set up to interact with the computation apparatus (13), which executes the parameterization program for parameterizing the electrical device (11a-h), such that a user interface for the parameterization program is displayed by means of the user unit (32) for the purpose of recording user settings,
**characterized in that**
the user unit (32) stores an explicit digital key associated with the operator of the electrical device, which key the user unit sends to the computation apparatus (13) for parameterizing the electrical device.

13. User unit (32) according to Claim 12,
**characterized in that**
- the user unit (32) is in the form of a mobile communication device or portable data processing apparatus.

14. System for parameterizing an electrical device (11a-h) having a computation apparatus (13), which provides a parameterization program for parameterizing the electrical device (11a-h), and a user unit (32);
**characterized in that**
- the computation apparatus (13) is in a form according to Claim 10 or 11;
- the user unit (32) is in a form according to Claim 12 or 13; and
- the computation apparatus (13) and the user unit (32) are set up to perform a method according to one of Claims 1 to 9.

## Revendications

1. Procédé de paramétrage d'un appareil (11a-h) électrique, dans lequel
- on établit une liaison de communication entre une unité (32) d'utilisateur et un dispositif (13) de calcul, un programme de paramétrage de l'appareil (11a) électrique étant mis à disposition par le dispositif (13) de calcul;
- au moyen de l'unité (32) d'utilisateur, on relève des réglages effectués du côté de l'utilisateur, qui concernent l'appareil (11a-h) électrique et
- en utilisant les réglages relevés, on forme des valeurs de réglage pour le paramétrage de l'appareil (11a-h) électrique et on produit un fichier de paramétrage de l'appareil (11ah) électrique contenant les valeurs de réglage, le programme de paramétrage de l'appareil (11a-h) électrique étant réalisé par le dispositif (13) de calcul, une surface de commande du programme de paramétrage étant appliquée au moyen de l'unité (32) d'utilisateur,
**caractérisé en ce que**
- on met en mémoire, dans l'unité (32) d'utilisateur, une clé d'exploitant numérique univoque affectée à l'exploitant de l'appareil (11a-h) électrique et l'unité (32) d'utilisateur envoie la clé au dispositif (13) de calcul et
- le dispositif (13) de calcul met en mémoire de manière chiffrée, en utilisant la clé d'exploitant, les valeurs de réglage et/ou le fichier de paramétrage et/ou d'autres informations se rapportant à l'appareil (11a-h) électrique et/ou des données reçues en fonctionnement par l'appareil (11a-h) électrique ou
- le dispositif (13) de calcul met en mémoire, dans une partie à accès protégé, en utilisant la clé d'exploitant, les valeurs de réglage et/ou le fichier de paramétrage et/ou d'autres informations se rapportant à l'appareil (11a-h) électrique et/ou des données reçues en fonctionnement par l'appareil (11a-h) électrique.

2. Procédé suivant la revendication 1,
**caractérisé en ce que**
- lors de l'exécution du programme de paramétrage, on transmet à l'unité (32) d'utilisateur, par l'unité (13) de calcul, des premières données, qui conviennent pour produire la surface de commande du programme de paramétrage;
- au moyen de l'unité (32) d'utilisateur et en utilisant les premières données reçues, on produit et on affiche la surface de commande pour relever les réglages du côté de l'utilisateur;
- on transmet, de l'unité (32) d'utilisateur au dispositif (13) de calcul, des deuxièmes données, qui indiquent les réglages relevés effectués du côté de l'utilisateur;
- au moyen du dispositif (13) de calcul et en utilisant les deuxièmes données reçues, on forme les valeurs de réglage de l'appareil (11a-h) électrique et
- au moyen du dispositif (13) de calcul et en utilisant les valeurs de réglage formées, on produit le fichier de paramétrage.

3. Procédé suivant la revendication 1 ou 2,
**caractérisé en ce que**
- on transmet, du dispositif (13) de calcul à l'appareil (11a-h) électrique, au moins des parties du fichier de paramétrage.

4. Procédé suivant l'une des revendications précédentes,
**caractérisé en ce que**
- on relève, par l'unité (32) d'utilisateur, une information d'identification de l'appareil (11a-h) électrique;
- on transmet, de l'unité (32) d'utilisateur à l'unité (13) de calcul, l'information d'identification de l'appareil (11a-h) électrique et
- le dispositif (13) de calcul adapte le programme de paramétrage en utilisant l'information d'identification, de manière à ce qu'il convienne pour le paramétrage de l'appareil (11a-h) ou choisit, dans une pluralité de programmes de paramétrage, l'un qui convient pour paramétrer l'appareil (11a-h).

5. Procédé suivant la revendication 4,
**caractérisé en ce que**
- le dispositif (13) de calcul détermine, en utilisant l'information d'identification, d'autres informations se rapportant à l'appareil (11a-h) électrique.

6. Procédé suivant l'une des revendications précédentes,
**caractérisé en ce que**
- le dispositif (13) de calcul est mis à disposition dans un cloud de traitement de données.

7. Procédé suivant l'une des revendications précédentes,
**caractérisé en ce que**
- lors de l'acquisition d'un appareil (11a-h) électrique nouveau par l'exploitant, le dispositif (13) de calcul combine et met en mémoire une information d'identification de l'appareil (11a-h) électrique nouveau à une clé d'exploitant de l'exploitant et
- lors d'un paramétrage de l'appareil (11a-h) électrique nouveau, le dispositif (13) de calcul n'accepte que des réglages de l'appareil ( 11a-h ) électrique nouveau, qui proviennent d'une unité ( 32 ) d'utilisateur disposant de la même clé d'exploitant.

8. Procédé suivant l'une des revendications précédentes,
**caractérisé en ce que**
- après la fin du paramétrage de l'appareil ( 11a-h ) électrique par l'unité ( 32 ) d'utilisateur, on appelle, par l'unité ( 13 ) de calcul, une information de logiciel, qui indique un état de version d'un logiciel d'appareil en cours pour l'appareil ( 11a-h ) électrique et
- l'unité ( 32 ) d'utilisateur indique l'information de logiciel et envoie, sur instruction du côté de l'utilisateur ou automatiquement, une demande de mise à jour au dispositif ( 13 ) de calcul pour faire que le dispositif ( 13 ) de calcul transmette le logiciel d'appareil en cours à l'appareil ( 11ah ) électrique.

9. Procédé suivant l'une des revendications précédentes,
**caractérisé en ce que**
- après la fin du paramétrage de l'appareil ( 11a-h ) électrique, dans le cas où l'appareil ( 11a-h ) électrique doit être remplacé par un autre appareil ( 11a* ) électrique, l'unité ( 32 ) d'utilisateur envoie au dispositif ( 13 ) de calcul une information d'identification de l'appareil ( 11ah ) électrique et une information d'identification de l'autre appareil ( 11a* ) électrique;
- le dispositif ( 13 ) de calcul prend les valeurs de réglage de l'appareil ( 11a-h ) électrique, comme valeurs de réglage de l'autre appareil ( 11a* ) électrique.

10. Dispositif ( 13 ) de calcul pour paramétrer un appareil ( 11a-h ) électrique, qui est conçu pour
- mettre à disposition un programme de paramétrage pour paramétrer l'appareil ( 11a-h ) électrique et
- communiquer avec une unité ( 32 ) d'utilisateur, conçue pour entrer des réglages de l'appareil ( 11a-h ) électrique, dans lequel
le dispositif ( 13 ) de calcul est constitué pour exécuter le programme de paramétrage de l'appareil ( 11a-h ) électrique par le dispositif ( 13 ) de calcul et, lors de l'exécution du programme de paramétrage, transmettre à l'unité ( 32 ) d'utilisateur une surface de commande du programme de paramétrage pour l'affichage et l'entrée du côté de l'utilisateur de réglages de l'appareil ( 11a-h ) électrique,
**caractérisé en ce que**
le dispositif ( 13 ) de calcul est constitué
- pour recevoir de l'unité ( 32 ) d'utilisateur une clé d'exploitant numérique univoque affectée à l'exploitant de l'appareil électrique;
- en utilisant la clé d'exploitant, mettre en mémoire de manière chiffrée les valeurs de réglage et/ou le fichier de paramétrage et/ou d'autres informations se rapportant à l'appareil ( 11a-h ) électrique et/ou des données reçues en fonctionnement par l'appareil ( 11a-h ) électrique ou
- mettre en mémoire dans une partie à accès protégé, en utilisant la clé d'exploitant, les valeurs de réglage et/ou le fichier de paramétrage et/ou d'autres informations se rapportant à l'appareil ( 11a-h ) électrique et/ou des données reçues en fonctionnement par l'appareil ( 11a-h ) électrique.

11. Dispositif ( 13 ) de calcul suivant la revendication 10,
**caractérisé en ce que**
- le dispositif ( 13 ) de calcul est constitué dans un cloud de traitement de données.

12. Unité ( 32 ) d'utilisateur pour paramétrer un appareil ( 11a-h ) électrique, qui est conçu pour
- établir une liaison de communication avec un dispositif ( 13 ) de calcul, qui met à disposition un programme de paramétrage pour paramétrer l'appareil ( 11a-h ) électrique et
- relever des réglages effectués du côté de l'utilisateur, qui concernent l'appareil ( 11a-h ) électrique, dans laquelle l'unité ( 32 ) d'utilisateur est conçue pour coopérer avec le dispositif ( 13 ) de calcul, qui exécute le programme de paramétrage, pour paramétrer l'appareil ( 11a-h ) électrique, de manière à indiquer, au moyen de l'unité ( 32 ) d'utilisateur, une surface de commande pour le programme de paramétrage, afin de relever des réglages du côté de l'utilisateur,
**caractérisée en ce que**
dans l'unité ( 32 ) d'utilisateur est mise en mémoire une clé numérique univoque affectée à l'exploitant de l'appareil électrique, que l'unité d'utilisateur envoie au dispositif ( 13 ) de calcul pour le paramétrage de l'appareil électrique.

13. Unité ( 32 ) d'utilisation suivant la revendication 12,
**caractérisée en ce que**
- l'unité ( 32 ) d'utilisateur est constituée sous la forme d'un appareil de communication mobile ou d'un dispositif de traitement de données portatif.

14. Système de paramétrage d'un appareil ( 11a-h ) électrique, comprenant un dispositif ( 13 ) de calcul, qui met à disposition un programme de paramétrage pour paramétrer l'appareil ( 11a-h ) électrique et une unité ( 32 ) d'utilisateur,
**caractérisé en ce que**
- le dispositif ( 13 ) de calcul est constitué suivant la revendication 10 ou 11;
- l'unité ( 32 ) d'utilisateur est constituée suivant la revendication 12 ou 13 et
- le dispositif ( 13 ) de calcul et l'unité ( 32 ) d'utilisateur sont conçus pour effectuer un procédé suivant l'une des revendications 1 à 9.
